# EUROPEAN PATENT APPLICATION

(11) **EP 4 749 423 A1**
(43) Date of publication of application: **27.05.2026**
(21) Application number: 25738580.7
(22) Date of filing: 10.01.2025
(51) Int. Cl.: G06F 3/0486

(54) **METHOD FOR ADDING MATERIAL TO FAVORITES ACROSS APPLICATIONS, AND ELECTRONIC DEVICE**

(30) Priority: 10.01.2024 CN 202410046020; 10.01.2024 CN 202410043031
(71) Applicant: Honor Device Co., Ltd., Shenzhen, Guangdong 518040 (CN)
(72) Inventor: LIANG, Henghui, Shenzhen, Guangdong 518040 (CN); WU, Dongang, Shenzhen, Guangdong 518040 (CN); YAO, Jianyong, Shenzhen, Guangdong 518040 (CN)
(74) Representative: Gill Jennings & Every LLP
(86) International application number: PCT/CN2025/071848
(87) International publication number: WO 2025/149053

(57) **Abstract**

This application provides a method for collecting a material across applications and an electronic device. The method includes: A first application is run and a first interface is displayed on the electronic device; and in response to a first operation performed by a user on the first interface, a first material in the first interface is added to a second application by using a first processing framework, where the first operation is a three-finger swipe down operation in the first interface; or in response to a second operation performed by the user on the first interface, a second material in the first interface is added to the second application by using a second processing framework, where the second operation is a touch-and-hold and drag-and-drop operation performed on the second material selected from the first interface. In this solution, two processing frameworks are designed, so that different processing frameworks can be invoked based on different user operations to achieve a purpose of cross-application collection, thereby making an entire collection process more flexible and diverse, which can meet a plurality of forms of collection requirements of the user, and further helping the user collect different types of materials as required.

## Description

This application claims priority to Chinese Patent Application No. 202410046020.6, filed with the China National Intellectual Property Administration on January 10, 2024 and entitled "METHOD FOR COLLECTING MATERIAL ACROSS APPLICATIONS AND ELECTRONIC DEVICE", and Chinese Patent Application No. 202410043031.9, filed with the China National Intellectual Property Administration on January 10, 2024 and entitled "METHOD FOR EXTRACTING PAGE MATERIAL AND ELECTRONIC DEVICE", which are incorporated herein by reference in their entireties.

### TECHNICAL FIELD

This application relates to the field of electronic device technologies, and in particular, to a method for collecting a material across applications and an electronic device.

### BACKGROUND

Favorites in a conventional electronic device can only be favorites that are scattered in different applications, and cannot be conveniently searched for. In addition, collected elements are diversified, and may include, for example, various elements such as a text, a picture, a video, audio, a webpage, and a file. To help a user manage and use these different forms of elements that are scattered in various applications, research and development personnel have designed a new application. In this application, the user may place all content that the user wants to collect across applications into the application for centralized management. In other words, global favorites are implemented.

However, because the global favorites involve different applications and different collected elements, a processing procedure is quite cumbersome and time-consuming. Therefore, how to optimize the processing procedure is a technical issue to be urgently addressed.

### SUMMARY

This application provides a method for collecting a material across applications and an electronic device. In this solution, two processing frameworks are designed, so that different processing frameworks can be invoked based on different user operations to achieve a purpose of cross-application collection, thereby making an entire collection process more flexible and diverse, and helping a user collect different types of materials as required.

According to a first aspect, a method for collecting a material across applications is provided, and is applied to an electronic device. The electronic device includes a first processing framework and a second processing framework. The method includes: A first application is run and a first interface is displayed on the electronic device; and in response to a first operation performed by a user on the first interface, a first material in the first interface is added to a second application by using the first processing framework, where the first operation is a three-finger swipe down operation in the first interface; or in response to a second operation performed by the user on the first interface, a second material in the first interface is added to the second application by using the second processing framework, where the second operation is a touch-and-hold and drag-and-drop operation performed on the second material selected from the first interface.

In the technical solution of this application, two processing frameworks are designed, so that different processing frameworks can be invoked based on different user operations to achieve a purpose of cross-application collection, thereby making an entire collection process more flexible and diverse, which can meet a plurality of forms of collection requirements of the user, and further helping the user collect different types of materials as required.

With reference to the first aspect, in some implementations of the first aspect, when adding, in response to a first operation performed by a user on the first interface, a first material in the first interface to a second application by using the first processing framework, the method may include: An interface of an activity management service (AMS) in the first processing framework is invoked to obtain a screenshot of the first interface; a global favorites middleware platform of the first processing framework is invoked to determine a view (view) type included in the screenshot of the first interface; a second interface is displayed on the electronic device, where the second interface includes the screenshot of the first interface and at least one control, and the at least one control is determined based on the view type included in the screenshot of the first interface; and in response to a tap operation performed by the user on a first control in the at least one control, the first material is added to the second application in a collection form corresponding to the first control by using the first processing framework. In this implementation, cross-application collection is triggered by the three-finger swipe down operation. An interface screenshot needs to be obtained first, and a view type in the interface screenshot is determined. Then, a corresponding control is provided for the user, indicating a specific form in which the user collects the first material. Then, based on a manner in which the user taps a control, collection is performed in a collection manner indicated by the tapped control.

With reference to the first aspect, in some implementations of the first aspect, the first control is a content extraction control, and when adding, in response to a tap operation performed by the user on a first control in the at least one control, the first material to the second application in a collection form corresponding to the first control by using the first processing framework, the method may include: All views in the screenshot of the first interface are traversed and filtered by using the global favorites middleware platform, to obtain a first sub-view set, where the first sub-view set includes at least one sub-view whose content is extractable; content of each sub-view in the first sub-view set is extracted by using the global favorites middleware platform and based on a view type of the sub-view, to obtain extracted content corresponding to the sub-view; a third interface is displayed on the electronic device after extraction of all sub-views in the first sub-view set is completed, where the third interface includes extracted content of the first sub-view set; in response to a selection operation performed by the user on target content in the extracted content of the first sub-view set in the third interface, the selected target content is determined as the first material; and in response to a tap operation performed by the user on a favorites confirmation control in the third interface, the first material is added to the second application by using the global favorites middleware platform. In this implementation, the user taps the content extraction control to trigger extraction of content in the entire screenshot. All sub-views whose content is extractable in the screenshot are traversed and filtered first, and then content of each sub-view is extracted based on a type of each sub-view. Then, all the extracted content is displayed in the third interface for the user to select, and collection is performed based on the user's selection. It should be understood that in this implementation, because whether the user wants to store content of an entire page or only a part of the content is unknown, or which part of the content the user wants to store is also unknown, the content of all sub-views in the entire screenshot is first extracted and set to a selectable state, thereby helping the user select which part the user wants to collect and store.

With reference to the first aspect, in some implementations of the first aspect, when traversing and filtering all views in the screenshot of the first interface by using the global favorites middleware platform, to obtain a first sub-view set, the method may include: During traversing, for each view in the screenshot of the first interface, at least one of the following operations is performed: when the view is a standard view, a view type of the view is obtained in a manner of obtaining the standard view, or when the view is a custom view, a view type of the view is determined by using a suffix of the view; and a size and/or a location of the view is read; and during filtering, at least one of the following operations is performed: only a view visible to the user in the screenshot of the first interface is retained, a hidden view in the screenshot of the first interface is removed, and a partially or completely blocked view in the screenshot of the first interface is removed. In this implementation, some or all of the information about the type, the size, and the location of the view is obtained during traversing. When the view type is obtained, different obtaining manners are employed separately based on whether the view is a standard view or a custom view. In this implementation, a view is further filtered to some extent. In addition to a view visible to the user, an interface may further include a hidden view or another view that is not displayed in the interface but belongs to the interface. Therefore, only a view visible to the user may be retained, or a hidden view is removed. Both cases have equivalent effects. In addition, a partially or completely blocked view may be further removed.

With reference to the first aspect, in some implementations of the first aspect, the first sub-view set includes a sub-view of at least one view type of a text, a picture, an offline webpage, a file, a video, and a link; and when extracting, by using the global favorites middleware platform, content of each sub-view in the first sub-view set based on a view type of the sub-view, to obtain extracted content corresponding to the sub-view, the method may include: For each sub-view, when a view type of the sub-view is a text, a text extraction module in the global favorites middleware platform is invoked to obtain text data of the sub-view, and the obtained text data is determined as extracted content of the sub-view; or for each sub-view, when a view type of the sub-view is a picture, a picture extraction engine in the global favorites middleware platform is invoked to obtain a bitmap (bitmap) of the picture from the sub-view, and the bitmap is determined as extracted content of the sub-view, and/or a text processing module in the global favorites middleware platform is invoked to obtain text data included in the picture in an optical character recognition (OCR) manner; or for each sub-view, when a view type of the sub-view is an offline webpage, a webpage extraction engine in the global favorites middleware platform is invoked to perform title extraction and content parsing on the webpage to obtain extracted content of the sub-view, where the extracted content of the sub-view includes an extracted title and parsed webpage content; or for each sub-view, when a view type of the sub-view is a file, a file extraction engine in the global favorites middleware platform is invoked to obtain a file path of the file, a copy file of the file or the file path of the file is determined as extracted content of the sub-view, and file information of the file is determined as the extracted content of the sub-view; or for each sub-view, when a view type of the sub-view is a video, a video extraction engine in the global favorites middleware platform is invoked, a playing area of the video is recognized by reading a video identifier (ID) that is written by the first application into an accessibility node, and screen recording is performed, a screenshot is taken, and/or a label is added, to obtain extracted content of the sub-view; or for each sub-view, when a view type of the sub-view is a link, an online link extraction engine in the global favorites middleware platform is invoked, and link information is obtained based on a uniform resource locator (URL) field carried in an activity (activity) or in a manner of reading a uniform resource locator (getURL) from a webpage view webview, where the obtained link information is extracted content of the sub-view. In this implementation, different content extraction strategies are available for different types of views, so that the solution of this application can support content extraction for a plurality of types of views at the same time, rather than only content extraction for a single type of view.

With reference to the first aspect, in some implementations of the first aspect, when invoking, for each sub-view when a view type of the sub-view is a text, a text extraction module in the global favorites middleware platform to obtain text data of the sub-view, and determining the obtained text data as extracted content of the sub-view, the method may include: An intelligent recognition platform is invoked by using the text extraction module, so that the intelligent recognition platform obtains the text data of the sub-view in the optical character recognition (OCR) manner, or the text data of the sub-view is obtained by using the text extraction module in a manner of reading information that is written by the first application into the accessibility node. In other words, for the sub-view of the text type, content extraction may be performed in two manners: OCR recognition or reading from the accessibility node.

With reference to the first aspect, in some implementations of the first aspect, when adding, in response to a tap operation performed by the user on a favorites confirmation control in the third interface, the first material to the second application by using the global favorites middleware platform, the method may include at least one of the following operations: directly adding a text material in the first material to the second application; storing a picture material in the first material into a gallery application, and adding a thumbnail of the picture to the second application, where the picture stored in the gallery application is associated with the thumbnail of the picture in the second application, and the thumbnail of the picture is a mapping element of the picture in the second application; storing an offline webpage material in the first material into a note application, and adding introduction content of the offline webpage to the second application, where the offline webpage stored in the note application is associated with the introduction content of the offline webpage in the second application, and the introduction content of the offline webpage is a mapping element of the offline webpage in the second application; storing a video material in the first material into the gallery application, and adding a thumbnail of a first frame of image of the video to the second application, where the video stored in the gallery application is associated with the thumbnail of the first frame of image of the video in the second application, and the thumbnail of the first frame of image of the video is a mapping element of the video in the second application; storing a file material in the first material into a file management application, and adding file information of the file to the second application, where the file stored in the second application is associated with the file information of the file in the second application, the file information of the file is a mapping element of the file in the second application, and the file information includes an icon of a file type and a file name; and directly adding a link material in the first material to the second application. In this implementation, description is provided that collection of different view types of materials (different types of materials) in the first material is completed according to different adding solutions.

With reference to the first aspect, in some implementations of the first aspect, the first control is a webpage collection control, a link collection control, or a file collection control, and when adding, in response to a tap operation performed by the user on a first control in the at least one control, the first material to the second application in a collection form corresponding to the first control by using the first processing framework, the method may include: When the first control is the webpage collection control, the first material is added to the second application in a form of an offline webpage, where the first material is content of an entire webpage of a webpage displayed in the first interface; or when the first control is the webpage collection control, the first material is added to the second application in a form of an offline webpage, where the first material is content, displayed in an interface, of a webpage displayed in the first interface; or when the first control is the link collection control, the first material is added to the second application in a form of a link, where the first material is an online link of a webpage displayed in the first interface; or when the first control is the file collection control, the first material is added to the second application in a form of a file, where the first material is a file displayed in the first interface, and the file is an open document, a video displayed in full screen, or a picture displayed in full screen. In this implementation, an example of another collection form is provided, and a form of collected content is enriched, helping the user perform collection according to different requirements. In other words, the user may collect, in different manners according to different collection requirements, the content the user wants to collect.

With reference to the first aspect, in some implementations of the first aspect, when invoking a global favorites middleware platform of the first processing framework to determine a view type included in the screenshot of the first interface, the method may include: The view type included in the screenshot of the first interface is determined based on a whitelist configuration of the first application or a whitelist configuration of the first interface. In this implementation, the view type included in the screenshot is determined based on the whitelist configuration. Introduction of the whitelist configuration may help determine an extractable range in the interface, so that a customized constraint is added to the extracted content, and different whitelists may be set for different applications or different interfaces as required.

With reference to the first aspect, in some implementations of the first aspect, when displaying a second interface on the electronic device, where the second interface includes the screenshot of the first interface and at least one control, the method may include: When the view type included in the screenshot of the first interface includes a webpage, the at least one control includes at least one of the webpage collection control, the link collection control, and the content extraction control; or when the view type included in the screenshot of the first interface includes a file, the at least one control includes at least one of the file collection control and the content extraction control; or when the view type included in the screenshot of the first interface includes only a picture or a video, the at least one control includes at least one of the file collection control and the content extraction control. In this implementation, the control type displayed on the second interface is determined based on different view types included in the screenshot, thereby helping the user perform selection as required. For example, assuming that the first interface does not include the webpage view, it is unnecessary to display the webpage collection control in the second interface.

With reference to the first aspect, in some implementations of the first aspect, when adding, in response to a second operation performed by the user on the first interface, a second material in the first interface to the second application by using the second processing framework, the method may include: The second material selected by the user from the first interface is obtained by using a content recognition service in the second processing framework; a view type included in the second material is determined by using the content recognition service and based on touch-and-hold coordinates of the second operation; a view tree is traversed and searched by using a view recognizer in the second processing framework to obtain a sub-view whose content is extractable included in the second material, to obtain a second sub-view set, where the second sub-view set includes at least one sub-view whose content is extractable; content of each sub-view in the second sub-view set is extracted by using the content recognition service and based on a view type of the sub-view, to obtain extracted content corresponding to the sub-view; extracted content of the second sub-view set is obtained after extraction of all sub-views in the second sub-view set is completed; and the extracted content of the second sub-view set is added to the second application by using a window management service (WMS) in the second processing framework and based on a view type included in the extracted content of the second sub-view set. In this implementation, global favorites are triggered by the drag-and-drop operation. Because an object needs to be first selected before drag-and-drop is performed, and start point coordinates for drag-and-drop (coordinates for touch-and-hold) may be obtained, a sub-view of selected content is determined in a manner of traversing and searching for all sub-views by using a view tree, instead of recognizing all sub-views in the entire interface. In this implementation, the user first selects an object (a second material) that the user wants to collect, and then performs view recognition on the second material and extracts content in a view, and collects the extracted content.

With reference to the first aspect, in some implementations of the first aspect, when adding, by using a window management service in the second processing framework, the extracted content of the second sub-view set to the second application based on a view type included in the extracted content of the second sub-view set, the method may include at least one of the following operations: directly adding text content in the extracted content of the second sub-view set to the second application; storing picture content in the extracted content of the second sub-view set into the gallery application, and adding a thumbnail of the picture to the second application, where the picture stored in the gallery application is associated with the thumbnail of the picture in the second application, and the thumbnail of the picture is a mapping element of the picture in the second application; storing offline webpage content in the extracted content of the second sub-view set into the note application, and adding introduction content of the offline webpage to the second application, where the offline webpage stored in the note application is associated with the introduction content of the offline webpage in the second application, and the introduction content of the offline webpage is a mapping element of the offline webpage in the second application; storing video content in the extracted content of the second sub-view set into the gallery application, and adding a thumbnail of a first frame of image of the video to the second application, where the video stored in the gallery application is associated with the thumbnail of the first frame of image of the video in the second application, and the thumbnail of the first frame of image of the video is a mapping element of the video in the second application; storing file content in the extracted content of the second sub-view set into the file management application, and adding file information of the file to the second application, where the file stored in the second application is associated with the file information of the file in the second application, the file information of the file is a mapping element of the file in the second application, and the file information includes an icon of a file type and a file name; and directly adding link content in the extracted content of the second sub-view set to the second application.

With reference to the first aspect, in some implementations of the first aspect, after the first material or the second material is added to the second application, the foregoing method further includes: A floating capsule (snackbar) is displayed on the electronic device, where the snackbar includes a prompt indicating a collection success and a view control; and the second application is started in response to a tap operation performed by the user on the view control, and an adding result is displayed in an interface of the second application. In this implementation, an execution process of prompting, after the collection succeeds, the user that the collection succeeds and helping the user view the collection result is provided.

With reference to the first aspect, in some implementations of the first aspect, the first material is obtained by performing the following steps: obtaining a first object of the first interface, where the first object includes a view whose material is to be extracted; determining a material type set of the first object, where the material type set includes at least one material type of the text, the picture, the file, the webpage, the video, and the online link; determining a view set corresponding to each type of material in the material type set in the first object, where each type of material corresponds to one view set, and each view set includes all views for which a material of a material type corresponding to the view set is extractable; extracting, for each material type in the material type set of the first object, a material of the material type from a view set corresponding to the material type; and obtaining a first material corresponding to the first object after extraction of all the view sets corresponding to the material type set of the first object is completed. In this implementation, views that include a same material type are first aggregated based on the material type, and then for each material type, the type of material in all views that include the type of material is extracted. Because the same type of material is extracted in a same or similar manner, or execution modules are the same, in this implementation, extraction efficiency can be improved.

According to a second aspect, a method for extracting a page material is provided. The method includes: A first object from a first page is obtained, where the first page is a display interface of a first application that is running on an electronic device, and the first object includes a view (view) of a to-be-extracted material; a material type set of the first object is determined, where the material type set includes at least one material type of a text, a picture, a file, a webpage, a video, and an online link; a view set corresponding to each type of material in the material type set in the first object is determined, where each type of material corresponds to one view set, and each view set includes all views for which a material of a material type corresponding to the view set is extractable; for each material type in the material type set of the first object, a material of the material type is extracted from a view set corresponding to the material type; and a first material corresponding to the first object is obtained after extraction of all the view sets corresponding to the material type set of the first object is completed.

In the technical solution of this application, based on a material type included in a selected object, a view that is in the selected object and that includes the type of material is locked, and then material extraction is performed by category, thereby meeting diversified material extraction requirements. The extracted page material may be subsequently used to collect and merge a document, or share the document with another application or another device.

It should be noted that the extraction method in the second aspect can be used to extract and obtain the first material in the first aspect based on the material type during execution of the method in the first aspect. The first page in the second aspect may be the first interface in the first aspect, and the first object in the second aspect may be the screenshot of the first interface in the first aspect. The first material in the second aspect may be the first material (corresponding to a case of the three-finger swipe down operation) in the first aspect.

It should be further understood that the extraction method in the second aspect can be further used to extract corresponding content from the second material based on the material type during execution of the method in the first aspect. The extraction process is similar to the extraction process of the first material. In this case, it is only necessary to replace "first object" with "second material" and replace "first material corresponding to the first object" with "extracted content of the second sub-view set" in the solution for obtaining the first material. For brevity, details are not described again.

With reference to the second aspect, in some implementations of the second aspect, when the material type set of the first object includes a text material, a view set corresponding to the text material includes at least one of a text view, a picture view, a file view, and a webview; and when extracting, for each material type in the material type set of the first object, a material of the material type from a view set corresponding to the material type, the method may include: When the text material is extracted from the view set corresponding to the text material, text data in each view in the view set is extracted based on an obtaining manner of the first object, and the extracted text data is determined as the text material extracted from the first object. In this implementation, for the text material, views that include text data, namely, the text view, the picture view, the file view, and the webview, are found from the first object and added to the view set of the text material. Extraction is performed based on the obtaining manner of the first object because different obtaining manners of the first object play a specific role in determining content included in the view set.

With reference to the second aspect, in some implementations of the second aspect, when extracting, when the text material is extracted from the view set corresponding to the text material, text data in each view in the view set based on an obtaining manner of the first object, and determining the extracted text data as the extracted text material, the method may include:

When the obtaining manner of the first object is a touch-and-hold and drag-and-drop operation on the first object, where the view set corresponding to the text material includes a text view and further includes a file view and/or a webview, text data in the text view is extracted according to a preconfigured extraction rule in a configuration file corresponding to the first object, or when the first object does not have a corresponding configuration file, text data in the text view is extracted according to a custom extraction rule; or
when the obtaining manner of the first object is a three-finger swipe down operation in the interface, where the view set corresponding to the text material includes a picture view of an interface screenshot of the first interface, a text is extracted from the picture view in the optical character recognition (optical character recognition, OCR) manner.

In this implementation, for the touch-and-hold and drag-and-drop operation, coordinates for touch-and-hold may be determined, and a case in which a text can be dragged and dropped includes only drag-and-drop after a text paragraph is selected from a common interface or a file or webpage display interface. Therefore, in the case of the touch-and-hold and drag-and-drop operation, the view set certainly includes a text view, and may further include a file view or a webview corresponding to the first interface. In this case, text data in the text view may be extracted according to a preconfigured rule or a custom extraction rule. It should be understood that, when a text paragraph is selected from a common interface, an open file, or an open webpage, it is equivalent to that the file view and the webview include a text view, and the first object is obtained by the drag-and-drop operation after selection is performed, and is only a part of the first interface rather than an entire interface. Therefore, in the case of the touch-and-hold and drag-and-drop operation, when the text material is extracted, a view corresponding to the entire interface does not need to be considered, and only a text view in selected content needs to be considered. For the three-finger swipe down operation, because the operation is performed on the entire page and no content is pre-selected, the first object may correspond to the entire page, or may be an entire webpage or file corresponding to the page. Therefore, in the case of the three-finger swipe down operation, the text material corresponds to the entire picture view of the interface screenshot.

With reference to the second aspect, in some implementations of the second aspect, when extracting, when the first object does not have a corresponding configuration file, text data in the text view according to a custom extraction rule, the method may include:

The text data of the text view is read from an accessibility node (AccessbilityNodeInfo) corresponding to the text view; or
when the text data of the text view fails to be read from the AccessbilityNodeInfo, text content is read from a text obtaining interface (getText) corresponding to the text view; or
when the text data of the text view fails to be read from the AccessbilityNodeInfo or the getText, a text view identifier (ViewID) is obtained in a manner of directly invoking a view, and then the text data of the text view is obtained based on the text ViewID; or
when the text data fails to be read from the AccessbilityNodeInfo, the getText, or the ViewID, the text data is obtained from a view character obtaining interface (getViewString) of the text view in a manner of directly invoking a view.

In this implementation, the custom extraction rule is some execution strategies that are sorted based on an execution priority. Reading is first preferentially performed from the accessibility node. This needs to depend on that the first application writes data into the accessibility node. Currently, most applications meet this condition. When a few applications do not meet this condition or reading fails for another reason, another manner of reading data is then successively attempted. The foregoing strategies are sorted from simple to complex from front to back, and an attempt is made preferentially from a simplest reading manner.

With reference to the second aspect, in some implementations of the second aspect, when the material type set of the first object includes a picture material, a view set corresponding to the picture material includes at least one of a picture view, a webview, and a custom view; and when extracting, for each material type in the material type set of the first object, a material of the material type from a view set corresponding to the material type, the method may include: At least one view that includes a picture of a standard picture view, the webview, and the custom view is determined from the view set corresponding to the picture material based on a configuration corresponding to a view name or an application name; for the standard picture view, a bitmap (bitmap) of the standard picture view is obtained in a manner of reading a storage interface of the picture, and the bitmap of the standard picture view and a uniform resource identifier URI of the bitmap of the standard picture view are determined as a picture material extracted from the first object; for the webview, a bitmap and a URI of a picture in the webview are obtained in a manner of injecting a JS script, and the bitmap of the webview and the URI of the bitmap of the webview are determined as a picture material extracted from the first object; for the custom view, a bitmap is copied in a manner of traversing and searching a key attribute in the custom view, and the bitmap of the custom view and a URI of the bitmap of the custom view are determined as a picture material extracted from the first object; and for the custom picture view, when the bitmap fails to be found from the key attribute, a bitmap of the custom picture view is drawn, and the bitmap of the custom view and a URI of the bitmap of the custom view are determined as a picture material extracted from the first object.

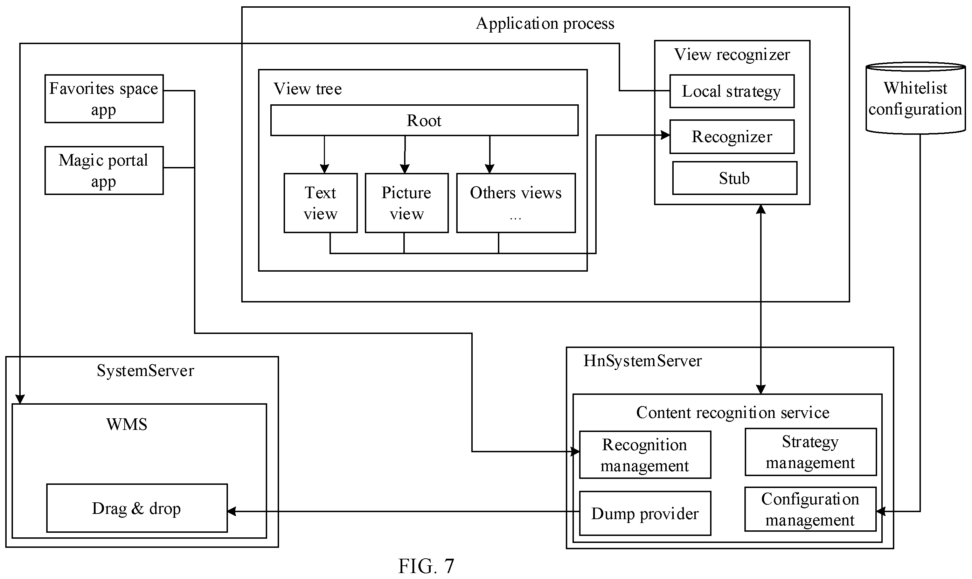

In this implementation, different extraction strategies are determined and executed based on whether the view is a picture view and whether the view is a standard picture view. The standard picture view is an imageview, and a picture may also exist in the webview. Therefore, it is separately noted that in the non-standard picture view, namely, the custom view, if the bitmap can be found, the bitmap of the custom view is read, or if the bitmap is not found, the bitmap of the custom view is directly drawn. FIG. 7 provides an example of a process of extracting a picture. According to the foregoing extraction strategies, a picture material may be extracted regardless of whether the view is a standard picture view, and there is a bottom line strategy for directly drawing a bitmap, thereby ensuring that pictures in all views that include pictures can be extracted.

With reference to the second aspect, in some implementations of the second aspect, when obtaining, for the standard picture view, a bitmap of the standard picture view in a manner of reading a storage interface of the picture, the method may include: The bitmap of the standard picture view is read from a storage node of the standard picture view; or when the bitmap of the standard picture view fails to be read, a bitmap of the standard picture view is drawn.

In this implementation, an execution strategy for searching for the bitmap of the standard picture is provided, and the bitmap is preferentially read from the storage node, and the bitmap is directly drawn if not found. According to the foregoing strategies, even if the bitmap fails to be read, there is a bottom line strategy for directly drawing the bitmap, thereby ensuring that pictures in all views that include pictures can be extracted.

With reference to the second aspect, in some implementations of the second aspect, when the material type set of the first object includes a file material, a view set corresponding to the file material includes a file view; and when extracting, for each material type in the material type set of the first object, a material of the material type from a view set corresponding to the material type, the method may include: When the first object is a file selected from the first interface, the obtaining manner of the first object is a touch-and-hold and drag-and-drop operation on the first object, and the view set corresponding to the file material includes only the file view, file information of the file view in the first object is directly extracted, whether the file exists in a storage path of the file view is searched, and when the file exists in the storage path of the file view, the file is copied and a URI of the copied file and the extracted file information are determined as a file material extracted from the first object; or when the first page is a display page of an open file, the first object is the open file, the obtaining manner of the first object is a three-finger swipe down operation in the first page, and the view set corresponding to the file material includes a file view corresponding to the open file, and further includes a text view and/or a picture view, pre-storage space is searched for file information of the open file, the file is copied based on a file path indicated by the read file information, and a URI of the copied file and the read file information are determined as a file material extracted from the first object; or when the file information of the open file fails to be found from the pre-storage space in a preset time period after the three-finger swipe down operation occurs, the file information of the open file is obtained by using a field of an activity activity, the file is copied based on a file path indicated by the obtained file information, and a URI of the copied file and the obtained file information are determined as a file material extracted from the first object, where the pre-storage space includes file information of all detected open files.

In this implementation, different strategies for extracting the file view are respectively provided for the drag-and-drop scenario and the three-finger swipe down scenario. For file collection, in the drag-and-drop scenario, drag-and-drop is certainly performed after one or more files included in the interface are selected. Whether these files are open does not need to be concerned. Therefore, only operations such as extracting the file information are required. In the three-finger swipe down scenario, an interface (the first page) is certainly currently being displayed. This interface displays a file that is being opened and displayed. Three-finger swipe down is three-finger swipe down in an open file. In this case, the file view in the selected first object is certainly a file view corresponding to the opened and displayed file. In this case, file information of the file needs to be found from file information of all pre-stored open files, and then the file is traced back for copying and URI extraction.

With reference to the second aspect, in some implementations of the second aspect, when directly extracting, when the first object is a file selected from the first page, the obtaining manner of the first object is a touch-and-hold and drag-and-drop operation on the first object, and the view set corresponding to the file material includes only the file view, file information of the file view in the first object, searching whether the file exists in a storage path of the file view, and when the file exists in the storage path of the file view, copying the file and determining a URI of the copied file and the extracted file information as a file material extracted from the first object, the method may include: Whether the first application accesses a file drag-and-drop framework is determined; and the URI of the open file is directly obtained when the first application accesses the file drag-and-drop framework; or when the first application does not access the file drag-and-drop framework, a file path of the open file is scanned and searched for by using a file name of the open file, to obtain the URI of the open file.

In this implementation, if the application (the first application) itself supports drag-and-drop of a file, a URI of the file can be directly found. However, if the application does not support drag-and-drop of a file, the file still needs to be traversed and searched in the file system.

With reference to the second aspect, in some implementations of the second aspect, when the material type set of the first object includes a webpage material, a view set corresponding to the webpage material includes a webview; and when extracting, for each material type in the material type set of the first object, a material of the material type from a view set corresponding to the material type, the method may include: A title and body text content of the webview in the first object are extracted in a manner of reading and parsing a readability file, and the extracted title and body text content are determined as a webpage material extracted from the first object.

In this implementation, for the webview, a webpage material in a form of an offline webpage is extracted in a manner of parsing content in the webview.

With reference to the second aspect, in some implementations of the second aspect, when the material type set of the first object includes a video material, a view set corresponding to the video material includes a webview; and when extracting, for each material type in the material type set of the first object, a material of the material type from a view set corresponding to the material type, the method may include: A video playing area in the first page is determined in a manner of reading video configuration information that is written by the first application into the accessibility node, at least one operation of performing screen recording, taking a screenshot, and adding a label is performed on a video being played, to obtain video excerpt content, and the obtained video excerpt content and a URI of the video excerpt content are determined as a video material extracted from the first object.

In this implementation, the video material is certainly some or all excerpts of a video that is played in the webview or a view similar to the webview. Excerption is a process, and therefore is equivalent to recording and extraction for a period of time. A video playing area is first locked (for example, when there is no full-screen playing of a video on a webpage), and then an operation such as performing screen recording or taking a screenshot is started to excerpt a segment or all of the video, to obtain a video excerpt material, which may also be referred to as a video material.

It should be noted that, for a video, in addition to storing an excerpt of the video, an online link of the video may be further stored. An online link material is extracted in a manner of extracting an online link. This case does not belong to extraction of a video material. In addition, a video in a case in which a video file is mutually transmitted in a chat application exists in a form of a file. The video file needs to be selected based on the drag-and-drop scenario and then be dragged and dropped. Therefore, reference may be made to extraction of the file material, but the extracted file material is a video.

With reference to the second aspect, in some implementations of the second aspect, when the material type set of the first object includes an online link material, a view set corresponding to the online link material includes at least one of an online link view and a webview; and when extracting, for each material type in the material type set of the first object, a material of the material type from a view set corresponding to the material type, the method includes: The online link material is obtained based on the uniform resource locator (uniform resource location, URL) field carried in the activity (activity) module or in the manner of reading the uniform resource locator (getURL) from the webview.

In this implementation, the online link may be searched for from the field carried in the activity, or be read from the webview. Some views are not webviews, but have a similar property to the webview, and also have corresponding links, for example, an online editing scenario of a shared document that frequently occurs in a work application. Other cases are no longer listed.

In an example, when obtaining the online link material based on the URL field carried in the activity or in the manner of getURL from the webview, the method may include: When the webview corresponding to the first page is a standard webview, an online link of the standard webview is obtained directly in the getURL manner, where the obtained online link is an online link material extracted from the first object; or when the webview corresponding to the first page is a custom webview, a name of the webview is matched from configuration information of the first page to find the custom webview corresponding to the first page, and then an online link of the custom webview is obtained in the getURL manner, where the obtained online link is an online link material extracted from the first object; or when the webview corresponding to the first page is neither a standard webview nor a custom webview, an online link of the webview is obtained from the URL field carried in the activity.

In this example, different manners of obtaining an online link are employed respectively based on whether the text view is a standard webview, a custom webview, or neither the standard webview nor the custom webview.

According to a third aspect, an apparatus for collecting a material across applications is provided. The apparatus includes a unit that includes software and/or hardware and that is configured to perform any one of the methods in the first aspect or the second aspect.

According to a fourth aspect, an electronic device is provided, including a memory, a processor, and a computer program that is stored in the memory and that is capable of running on the processor. When the processor executes the computer program, any one of the methods in the first aspect or the second aspect can be implemented.

According to a fifth aspect, a chip is provided, including a processor, where the processor is configured to read and execute a computer program stored in a memory, and when the computer program is executed by the processor, any one of the methods in the first aspect or the second aspect can be implemented.

Optionally, the chip further includes a memory, and the memory is electrically connected to the processor.

Optionally, the chip may further include a communication interface.

According to a sixth aspect, a computer-readable storage medium is provided. The computer-readable storage medium stores a computer program. When the computer program is executed by a processor, any one of the methods in the first aspect or the second aspect can be implemented.

According to a seventh aspect, a computer program product is provided. The computer program product includes a computer program, and when the computer program is executed by a processor, any one of the methods in the first aspect or the second aspect can be implemented.

### BRIEF DESCRIPTION OF DRAWINGS

FIG. 1A to FIG. 1D are schematic diagrams of an interaction process of collecting a material across applications according to an embodiment of this application;
FIG. 2A to FIG. 2D and FIG. 3A to FIG. 3C are schematic diagrams of another interaction process of collecting a material across applications according to an embodiment of this application;
FIG. 4A to FIG. 4C are schematic diagrams of another interaction process of collecting a material across applications according to an embodiment of this application;
FIG. 5A to FIG. 5D are schematic diagrams of another interaction process of collecting a material across applications according to an embodiment of this application;
FIG. 6 is a schematic diagram of a processing framework for collecting a material across applications according to an embodiment of this application;
FIG. 7 is a schematic diagram of another processing framework for collecting a material across applications according to an embodiment of this application;
FIG. 8 is a schematic flowchart of a method for collecting a material across applications according to an embodiment of this application;
FIG. 9 is a schematic flowchart of a method for extracting a page material according to an embodiment of this application;
FIG. 10 is a schematic diagram of a page material extraction framework in a touch-and-hold and drag-and-drop operation scenario according to an embodiment of this application;
FIG. 11 is a schematic diagram of an execution framework for extracting a text material based on OCR according to an embodiment of this application;
FIG. 12 is a schematic flowchart of extracting a picture material according to an embodiment of this application;
FIG. 13 is a schematic diagram of an execution framework for extracting a file material in a three-finger swipe down scenario according to an embodiment of this application;
FIG. 14 is a schematic flowchart of extracting a file material in a three-finger swipe down scenario according to an embodiment of this application;
FIG. 15 is a schematic diagram of an execution framework for extracting a webpage material according to an embodiment of this application;
FIG. 16 is a schematic diagram of an execution framework for extracting an online link according to an embodiment of this application;
FIG. 17 is a schematic diagram of a structure of an electronic device according to an embodiment of this application; and
FIG. 18 is a schematic diagram of a hardware structure of another electronic device according to an embodiment of this application.

### DESCRIPTION OF EMBODIMENTS

The following describes solutions in embodiments of this application with reference to accompanying drawings.

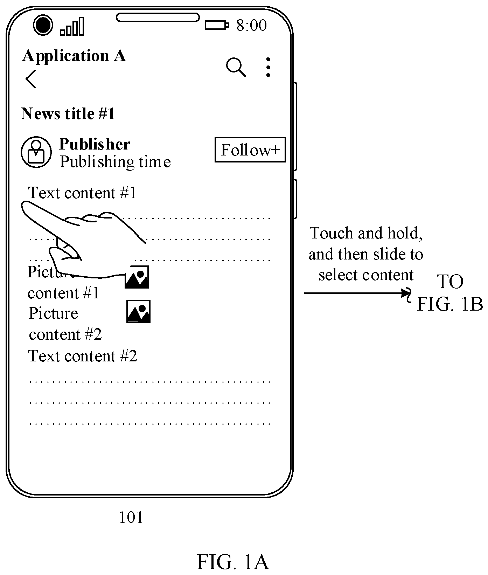

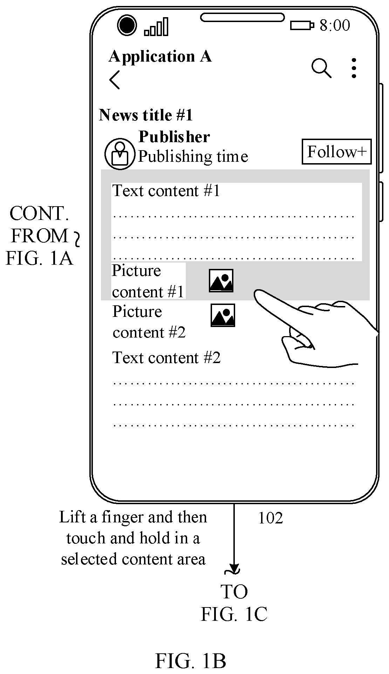

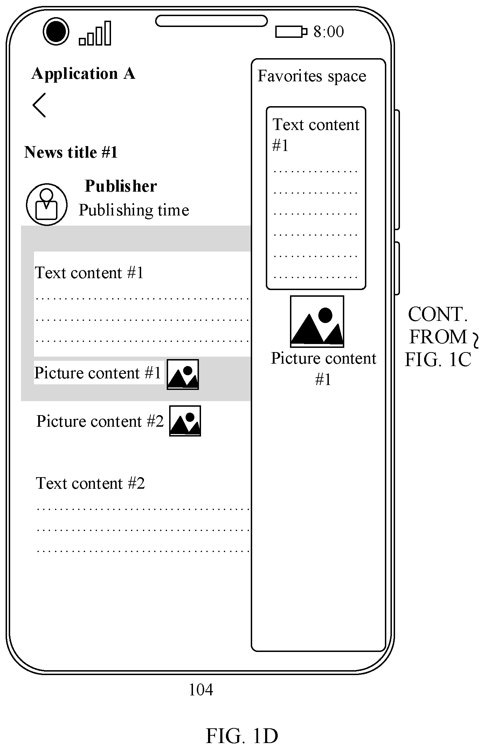

FIG. 1A to FIG. 1D are schematic diagrams of an interaction process of collecting a material across applications according to an embodiment of this application. As shown in FIG. 1A to FIG. 1D, it is assumed that a user opens an application A on an electronic device, and enters an interface shown in an interface 101, where the interface includes some image-text data of one piece of news. It is assumed that the user selects a part of content from the interface 101 in a manner of touching and holding and then sliding. As shown in an interface 102, the user selects a part of text content and content of one picture. It is assumed that the user lifts a finger after selecting the content, and then touches and holds a selected content area. In response to the touch-and-hold operation, the electronic device displays an interface 103. In the interface 103, the selected content is presented in the interface in a superimposition manner and in a floating form. It is assumed that the user drags the selected content in the floating state to a side edge of the electronic device on the basis of touching and holding without releasing a finger in the interface 103, and the selected content can be added to a favorites space application. As shown in an interface 104, a display interface of the favorites space application is further superimposed on the interface of the application A. This is an elongated interface, and it can be seen from the display interface of the favorites space that the selected content is added to the favorites space, and a text and a picture are separately stored as a material.

It should be further understood that, in FIG. 1A to FIG. 1D, the application A is used as an example, page content in the application A is added to the favorites space for collection. For another application, page content in the application may also be added to the favorites space, and details are not described again. For example, chat content in a chat application may be selected and dragged, and then added to the favorites space. For another example, a mutually transmitted file in the chat application may be dragged to the favorites space. For another example, an attachment in an email application may be dragged to the favorites space. For another example, body text content of an email in the email application may be selected and dragged to the favorites space. For another example, a displayed picture in a shopping application may be dragged to the favorites space. For another example, a picture and a video in a gallery application may be dragged to the favorites space. Other cases are no longer listed one by one.

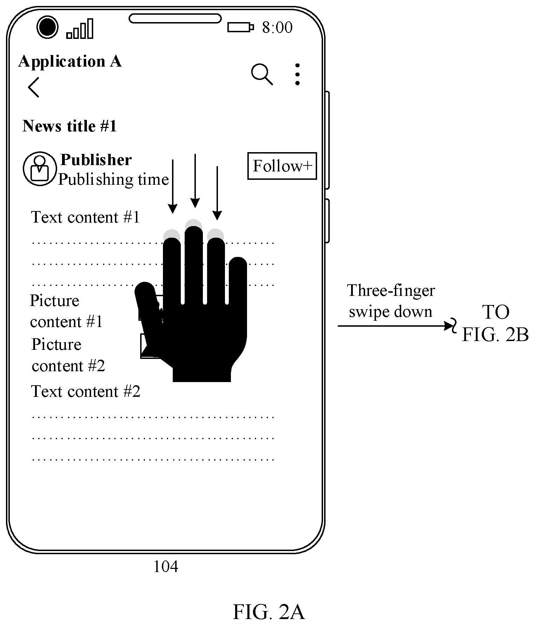

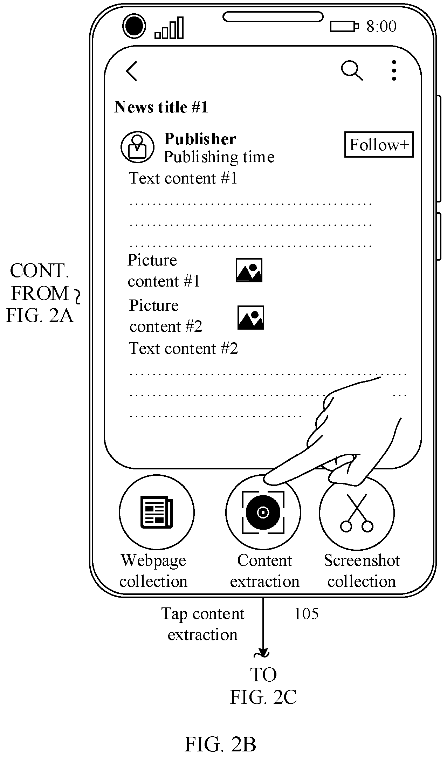

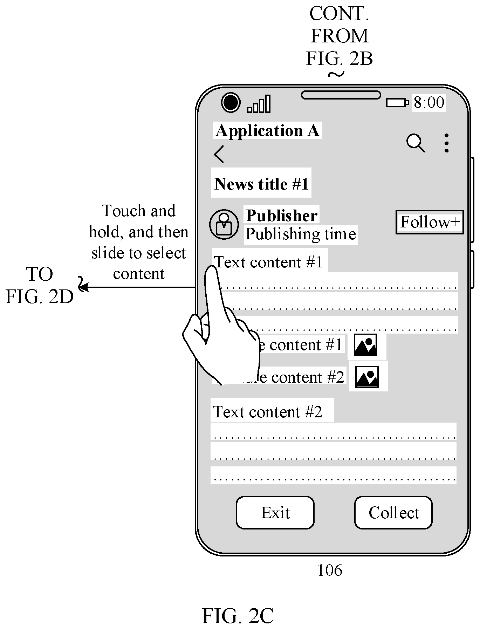

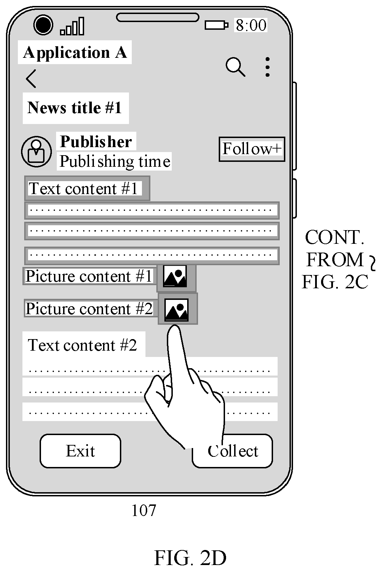

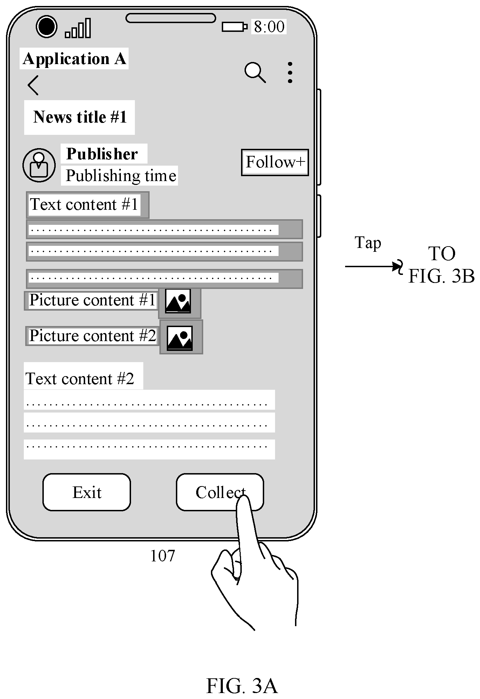

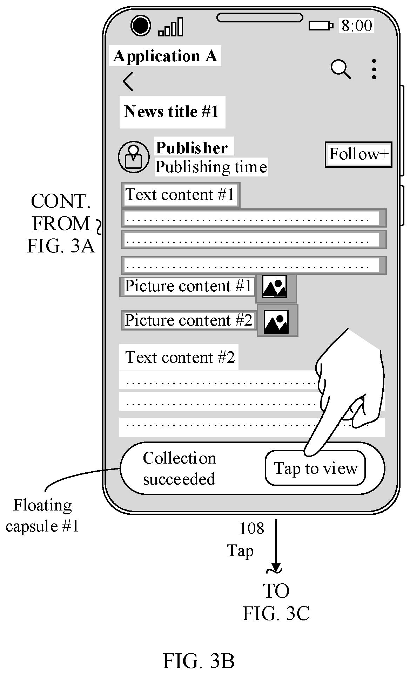

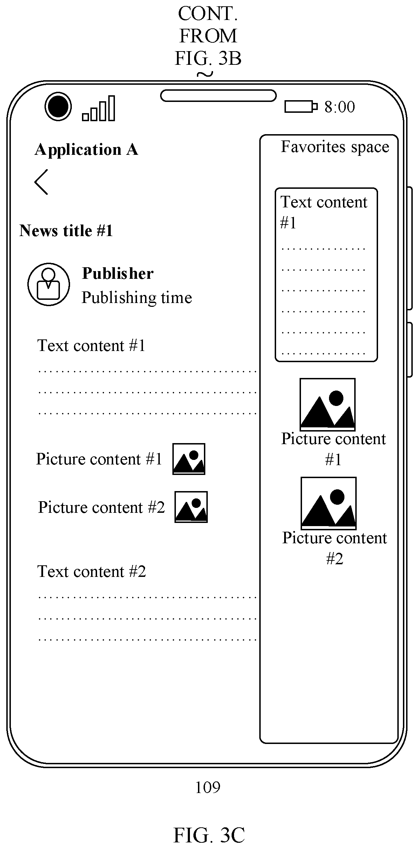

FIG. 2A to FIG. 2D and FIG. 3A to FIG. 3C are schematic diagrams of another interaction process of collecting a material across applications according to an embodiment of this application. As shown in FIG. 2A to FIG. 2D, it is assumed that a user opens an application A on an electronic device, and enters an interface shown in an interface 104, where the interface includes some image-text data of one piece of news. It is assumed that the user performs an operation of three-finger touch and hold and then three-finger swipe down on the interface 104. In response to the three-finger swipe down operation, the electronic device displays an interface 105. In addition to the interface content of the interface 104, the interface 105 further includes three controls: webpage collection, content extraction, and screenshot collection. It should be understood that, in practice, a quantity of controls included in the interface 105, a control type, and a control form may be set as required. It should be further understood that, with different content included in the interface 104, quantities and types of controls in the interface 105 may also be different. For example, the interface 104 is a webpage herein. Therefore, the interface 105 includes webpage collection, and may further include link collection. It is assumed that the interface 104 displays an open file. It is assumed that a pdf document is used as an example. It is assumed that the interface 104 displays an open pdf. In this case, the interface 105 may include at least one of file collection, content extraction, and screenshot collection. It is further assumed that the interface 104 displays one picture in full screen. In this case, the interface 105 may include picture collection (equivalent to file collection) and content extraction (which only refers to extraction of content in the picture herein). Other cases are no longer listed one by one.

It is assumed that the user taps the content extraction control in the interface 105. In response to the tap operation, the electronic device displays an interface 106. In an entire interface of the interface 106, a background color of selectable content is different from a background color of non-selectable content. Herein, an example in which the background color of the non-selectable content is a gray background color, and the background color of the selectable content is a white background color is used. The interface 105 further includes two controls, exit and collection. It is assumed that the user selects, in the interface 105, a part of content from the selectable content in the interface 105 in a manner of touching and holding and then sliding, as shown in an interface 107. It can be seen from the interface 107 that a segment of text content (text content #1) and two pictures (picture content #1 and picture content #2) are selected herein as examples. A background color of the selected content is different from both a background color of unselected content and a background color of the non-selectable content. In other words, in the interface 107, the selected content is marked with a background color. However, it should be understood that in practice, the selected content may alternatively be marked in another manner. For example, a color of selected target content may be different from a color of other selectable content, and may also be different from a color of other non-selectable content.

As shown in FIG. 3A to FIG. 3C, it is assumed that the user ends the selection operation by lifting a finger after the operations of touching and holding and then sliding in the interface 107, and taps the collection control. In response to the tap operation, the electronic device adds the selected content to the favorites space. After the adding is completed, an interface 108 is displayed. The interface 108 includes a floating capsule (snackbar) #1, and the floating capsule #1 includes a prompt indicating a collection success and a tap to view control indicating to view a collection result. It is assumed that the user taps a view control "tap to view" in the interface 108. In response to the tap operation, the electronic device displays an interface 109. As shown in the interface 109, a display interface of a favorites space application is further superimposed on the interface of the application A. Herein, the favorites space application is an elongated interface, and it can be seen from the display interface of the favorites space that, the selected content is added to the favorites space and the text and the picture are separately stored as a material. As shown in the interface 107, the segment of text and two pictures that are selected are collected to the favorites space.

It should be further understood that, in FIG. 2A to FIG. 2D and FIG. 3A to FIG. 3C, the application A is used as an example. After triggering through three-finger swipe down, page content in the application A is added to the favorites space for collection. For another application, page content in the application may also be added to the favorites space, and details are not described again. For example, target content may be selected after three-finger swipe down is performed in a chat interface in a chat application, and content is selected for extraction. Then, the target content is collected to the favorites space by tapping a collection control. For another example, three-finger swipe down may be performed on a display interface of an email application, and then a material is selected and added to the favorites space. An interaction process is similar to those in FIG. 2A to FIG. 2D and FIG. 3A to FIG. 3C, and details are not described again. For another example, three-finger swipe down may be performed in a shopping application, and then a material such as a picture is selected and added to the favorites space. For another example, three-finger swipe down may be performed on a display interface of a gallery application, and all pictures and/or videos in the current interface may be added to the favorites space. Other cases are no longer listed one by one.

It is assumed that the user taps a webpage favorites space in an interface 105. An entire webpage corresponding to an interface 104 may be collected to the favorites space in a form of a webpage material such as an offline webpage. It is assumed that the user taps screenshot collection in the interface 105. A screenshot of the interface 104 may be taken and then be collected to the favorites space in a form of a picture material. It is assumed that the interface 105 further includes a link collection control. When the user taps the link collection control, an online link of a webpage corresponding to the interface 104 may be further collected to the favorites space in a form of an online link material. Other cases are no longer listed one by one.

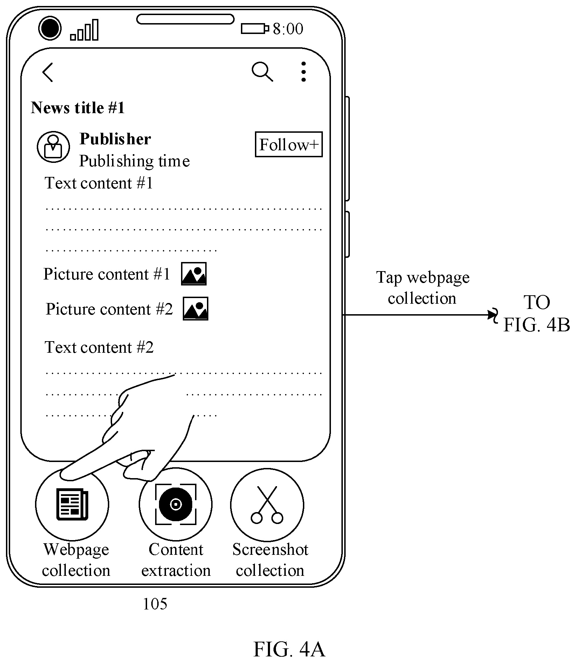

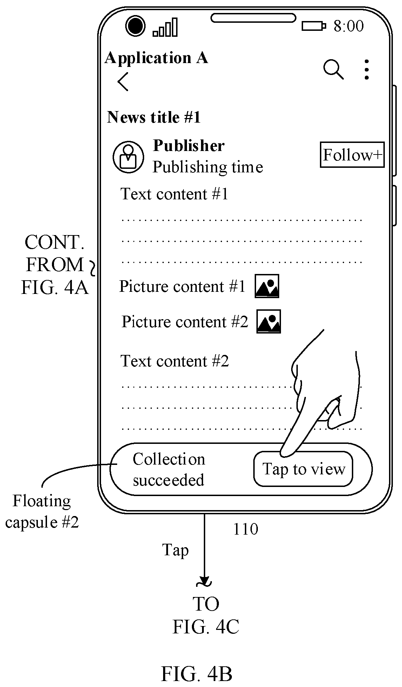

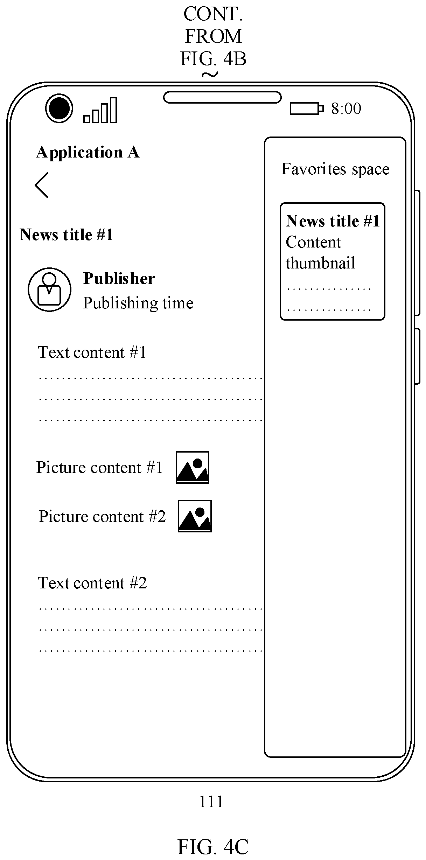

FIG. 4A to FIG. 4C are schematic diagrams of another interaction process of collecting a material across applications according to an embodiment of this application. FIG. 4A to FIG. 4C may be considered as an interactive operation that is performed after the interface 105 shown in FIG. 2A to FIG. 2D is displayed. It is assumed that the user taps webpage collection in the interface 105. In response to the tap operation, the electronic device displays an interface 110, and the interface 110 includes a floating capsule #2. It is assumed that the user taps "tap to view" in the floating capsule #2. In response to the tap operation, the electronic device displays an interface 111. It can be seen from the interface 111 that a material collected in a form of a webpage, namely, an offline webpage material is added to the favorites space. It can be learned from comparison between the interface 111 and the interface 109 that, during webpage collection, valid content displayed in the entire interface 101 or valid content displayed in the entire interface 105 is all added to the favorites space, and the favorites space is used as a group of materials instead of separately storing texts and pictures.

It should be further understood that the webpage collection may be collecting the content displayed in the interface 105 in a webpage form instead of collecting all content of an entire webpage included in the interface 105. However, the webpage collection may alternatively be collecting all content of the entire webpage included in the interface 105 in a webpage form, and is not limited only to content that is visible to the user through a screen in the interface 105. The foregoing two manners may be preset according to an actual requirement of the electronic device.

In addition, it is assumed that the user taps screenshot collection in the interface 105. A screenshot obtained after a screenshot of the interface 105 is taken may alternatively be collected to the favorites space.

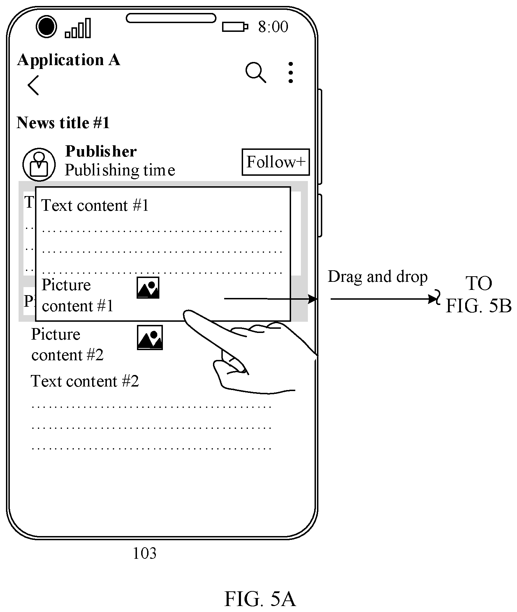

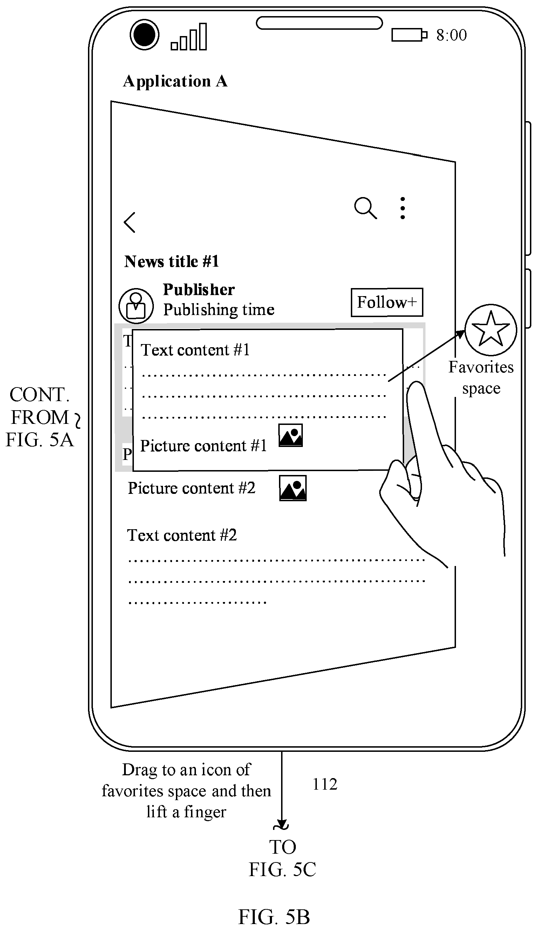

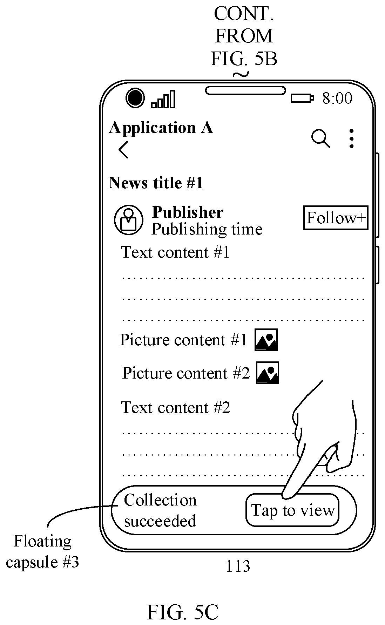

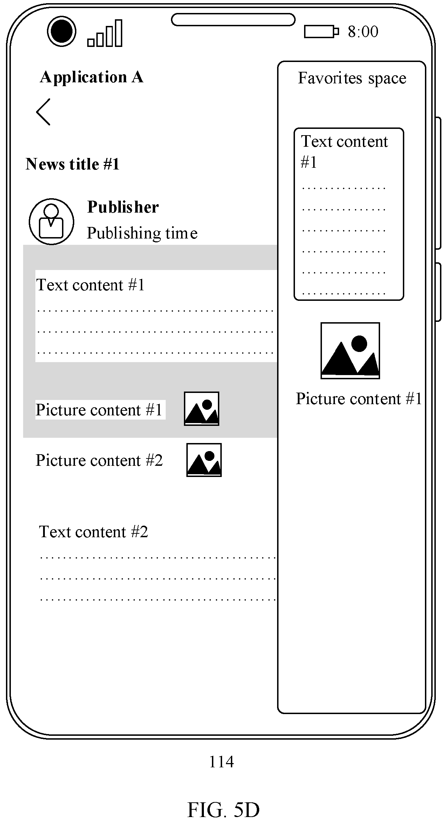

FIG. 5A to FIG. 5D are schematic diagrams of another interaction process of collecting a material across applications according to an embodiment of this application. FIG. 5A to FIG. 5D may be considered as an interaction process that is performed after the interface 103 shown in FIG. 1A to FIG. 1D is displayed. It is assumed that the user touches and holds the floating selected content in the interface 103 and then drags the floating selected content to a side edge of the electronic device. The electronic device displays a door opening motion shown in an interface 112. A portal application includes an icon of the favorites space application. It is assumed that the user continues to drag the floating selected content to the icon of the favorites space and then lifts a finger. In response to the operation, the electronic device performs the step of adding the selected content to the favorites space, and displays an interface 113 after the adding is completed. The interface 113 displays a floating capsule #3 to prompt the user that the collection has succeeded. It is assumed that the user taps "tap to view" in the floating capsule #3. In response to the tap operation, the electronic device displays an interface 114. As shown in the interface 114, a display interface of a favorites space application is further superimposed on the interface of the application A. Herein, the favorites space application is an elongated interface, and it can be seen from the display interface of the favorites space that, the selected content is added to the favorites space and the text and the picture are separately stored as a material. As shown in the interface 103, the segment of text and a picture that are selected are collected to the favorites space. The text is used as one material, and the picture is used as another material.

It should be understood that FIG. 1A-FIG. 5D are merely examples of the interaction process of cross-application collection. In practice, specific content, included controls, and a quantity of controls in an interface may vary. It can be seen from FIG. 1A-FIG. 5D that in a process of collecting a material across applications, different content of different applications may be collected to the favorites space in a centralized manner, that is, global favorites are implemented, thereby helping the user subsequently view and use the collected material in the favorites space. However, in the foregoing interaction process, different materials in different trigger operations are added to the favorites space in different manners. Therefore, the electronic device needs to have a capability of extracting content of different types of materials. To resolve the foregoing problems, in a solution of collecting a material across applications provided in this application, content extraction is separately performed based on different types of views, thereby implementing content extraction for the foregoing different materials.

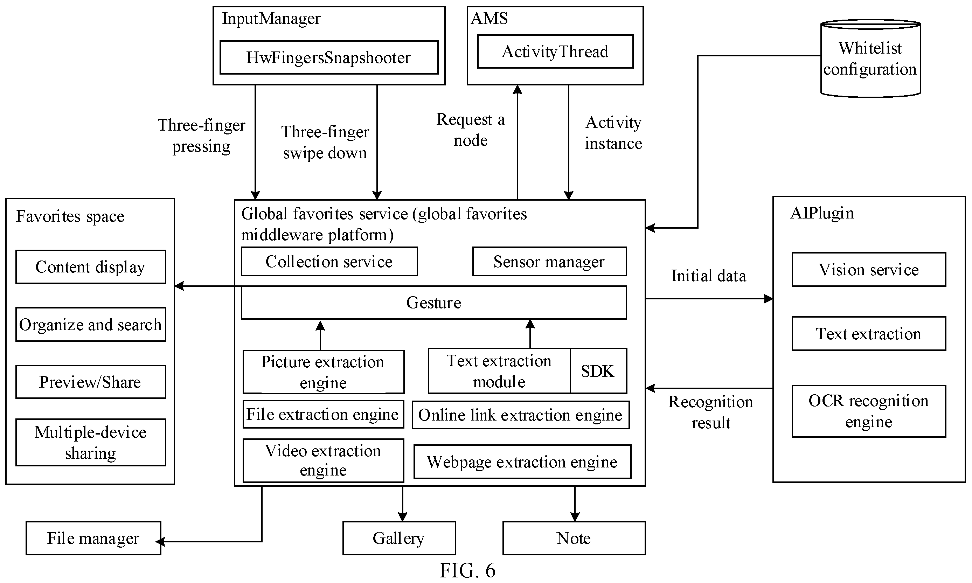

FIG. 6 is a schematic diagram of a processing framework for collecting a material across applications according to an embodiment of this application. As shown in FIG. 6, an input manager (InputManager) is configured to obtain a three-finger pressing operation (used to start a global favorites service) and a three-finger swipe down operation (used to trigger the global favorites service). A finger recognition (HwFingersSnapshooter) module in the input processor is configured to recognize gesture operations of three-finger pressing and three-finger swipe down.

The input processor sends various obtained operations to the global favorites service (global favorites middleware platform). The global favorites middleware platform includes a collection service (CollectionService) module, a sensor manager (SensorManager), a gesture (gesture) module, and an extraction engine/module for various views. For example, a text extraction module (TexExtractClient), a picture extraction engine (PictureExtractEngine), a file extraction engine (FileExtractEngine), a video extraction engine (VideoExtractEngine), an online link extraction engine (OnlinelinkExtractEngine), and a webpage extraction engine (WebPageExtractEngine) are included. In other words, each type of view corresponds to one extraction engine/extraction module. Therefore, a quantity of extraction engines/extraction modules included in the global favorites middleware platform may be set based on different types of views that need to be extracted.

Each extraction engine/module in the global favorites middleware platform performs view extraction based on triggering by the gesture module, and starts and dispatches a corresponding process by using an activity management service (activity manager service, AMS), to perform a subsequent operation.

The global favorites middleware platform may request a node (resquestContentNode) from the AMS, and the AMS transfers an activity instance based on a request feedback node, thereby sending the screenshot of the interface during the three-finger swipe down operation to the global favorites middleware platform.

After extracting the to-be-collected content (which may be an entire webpage or file, or the like, or may be a small part of content in the first interface), the global favorites middleware platform respectively stores different types of materials into the file manager, the gallery, the note, or the favorites space based on the type of view, and stores mapping elements such as thumbnails into the favorites space. The favorites space application may display, organize and search, and preview/share the collected content, and share the collected content with another electronic device through multiple-device sharing. When a text in a picture needs to be extracted, the global favorites platform sends initial data, namely, to-be-recognized data to the intelligent recognition platform AIPlugin, and receives a recognition result. The intelligent recognition platform includes a vision service (VisionService), text extraction (TextConfiguration), and an OCR recognition engine (OcrDetectEngine). The VisionService is used to recognize a view in the interface, the TextConfiguration is used to recognize a text object, and the OcrDetectEngine is used to recognize a text in a picture, that is, recognize the text in the picture based on a character shape. Because the global favorites middleware platform receives the interface screenshot sent by the AMS, the text in the interface screenshot, including the text in the picture in the screenshot, can be recognized through the OCR.

The global favorites platform reads a whitelist configuration from a cloud storage or another storage module or memory to guide the collection process.

With reference to FIG. 2A to FIG. 2D and FIG. 3A to FIG. 3C, when the user performs the three-finger pressing operation in the interface 104, the pressing operation is obtained by the input processor and is transferred to the global favorites service middleware platform, and then the global favorites service middleware platform starts the global favorites service. When the user performs the three-finger swipe down operation on the basis of the three-finger pressing operation, the three-finger swipe down operation is obtained by the input processor to the global favorites service middleware platform and is transferred to the global favorites service middleware platform. Then, the collection service module in the global favorites service middleware platform collects the content in the interface, requests a node from the AMS, and displays the interface 105 in a manner of an activity instance. When the user taps content extraction in the interface 105, the input processor obtains the tap operation and transmits the tap operation to the global favorites service middleware platform. Each extraction engine/extraction module in the global service middleware platform is linked with the intelligent recognition platform. With reference to the received whitelist configuration, and based on a type of each view in the interface 105, a corresponding engine/module is invoked to perform content extraction, thereby determining a display result shown in the interface 106. When the user performs an operation of touching and holding and then sliding selected content in the interface 106, the input processor obtains the operation and transmits the operation to the global favorites service middleware platform. The global favorites service middleware platform marks the selected content. When the user taps a collection control in an interface 107, the input processor obtains the tap operation and sends the tap operation to the global favorites service middleware platform. The global service middleware platform stores the element (material) into a corresponding location and adds the element (material) to the favorites space based on a view type corresponding to each element in the selected content. Using a text view as an example, the global favorites service middleware platform directly sends a text material to the favorites space for display and storage in the favorites space. When a picture view is used as an example, the global favorites service platform stores a picture into the gallery, and sends a thumbnail of the picture to the favorites space for storage. The picture is associated with the thumbnail of the picture. Other cases are no longer listed one by one. For example, an offline webpage may be stored in a note, and only a thumbnail is displayed in the favorites space. A file may be stored in a file manager, and only file information is displayed in the favorites space.

FIG. 7 is a schematic diagram of another processing framework for collecting a material across applications according to an embodiment of this application. FIG. 6 and FIG. 7 may be understood as describing an execution process of the solution in this embodiment of this application from a perspective of an internal execution process of the electronic device. FIG. 6 is an example of a first processing framework, and FIG. 7 is an example of a second processing framework.

An application process includes a view tree (view tree) and a view recognizer (view recognizer). The view recognizer includes a local strategy (local strategies), a recognizer (recognizers), and a stub (stubs). The view tree includes a tree-like relationship between all sub-views and a parent view, where root refers to a root view, and the root view includes a text view (textview), a picture view (imageview), and another sub-view, for example, a file view and a webpage view. Examples are no longer listed one by one. The sub-view may further include a custom view, which is no longer expanded herein. These sub-views may be recognized by using the recognizers module in the view recognizer, and the recognition may include recognizing a type and a size of a view, whether the view is blocked, and the like. After determining a view type of a sub-view, the local strategies send a processing strategy corresponding to the sub-view to a window management service (WindowManagerService, WMS) in a native system service framework (SystemServer), so as to guide how to display different views during display in the favorites space. Stubs are used to store related data. The view recognizer may further send the recognized information such as the type of the sub-view and the sub-view to a content recognition service (content recognizer server) in a self-developed system service framework (HnSystemServer).

The recognition management (recognizer manage) in the HnSystemServer starts the content recognition service based on triggering by the favorites space application (app) and a magic portal app. Strategy management (strategy manage) in the HnSystemServer is used to manage the processing strategy in the view recognizer. A dump provider (dump provider) is used to determine a storage location and a mapping element of extracted content of each sub-view based on the view type. Configuration management (config manage) in the HnSystemServer is used to determine extractable content during content extraction based on the received whitelist configuration and/or blacklist configuration. The whitelist is used to customize custom controls in an application. For example, it can be seen from the interface 106 that a follow control and the like in the application A are non-extractable content, which, however, may be changed to extractable content by using the whitelist. It may be understood that the whitelist configuration is used to determine which interfaces can be extracted, and/or determine which views in an interface can be extracted. The blacklist configuration is used to determine which interfaces cannot be extracted, and/or determine which views in an interface cannot be extracted. A basis for non-extractable may be set as required. In other words, the blacklist configuration may be determined according to an actual requirement.

A file drag-and-drop module (drag & drop) in the WMS is used to implement file dump. For example, the text view is stored in the favorites space, the picture view is stored in the gallery, and the file is stored in the file manager. Other cases are no longer listed one by one.

FIG. 7 mainly describes an execution process in a drag-and-drop operation, that is, provides an example of an internal execution process of the collection manner shown in FIG. 1A to FIG. 1D and FIG. 5A to FIG. 5D. In the case of the drag-and-drop operation, because a pressing location (coordinates) during touch-and-hold and drag-and-drop can be obtained, a sub-view in selectable content can be traversed and found by using the view tree.

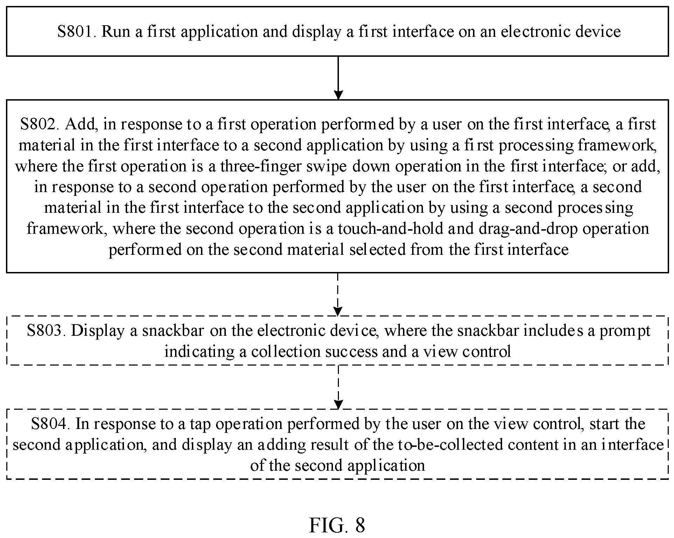

FIG. 8 is a schematic flowchart of a method for collecting a material across applications according to an embodiment of this application. The following describes steps shown in FIG. 8.

S801: Run a first application and display a first interface on an electronic device.

The electronic device includes a first processing framework and a second processing framework. FIG. 6 and FIG. 7 provide examples of the first processing framework and the second processing framework, respectively.

In this embodiment of this application, content in a first application is mainly collected to a second application. The first application may be a different application, and the second application is an application that can perform global favorites. The global favorites mean that content of many applications in an entire electronic device may be collected together, that is, collected to the second application. The foregoing application A is an example of the first application. However, it should be understood that the first application may alternatively be another application such as a chat application, an email application, a shopping application, or a browser application. Examples are no longer listed one by one. Both an interface 101 and an interface 104 may be considered as an example of the first interface.

The foregoing favorites space may be considered as an example of the second application.

S802: Add, in response to a first operation performed by a user on the first interface, a first material in the first interface to a second application by using the first processing framework, where the first operation is a three-finger swipe down operation in the first interface; or add, in response to a second operation performed by the user on the first interface, a second material in the first interface to the second application by using the second processing framework, where the second operation is a touch-and-hold and drag-and-drop operation performed on the second material selected from the first interface.

The first material may correspond to some or all content in the first interface.

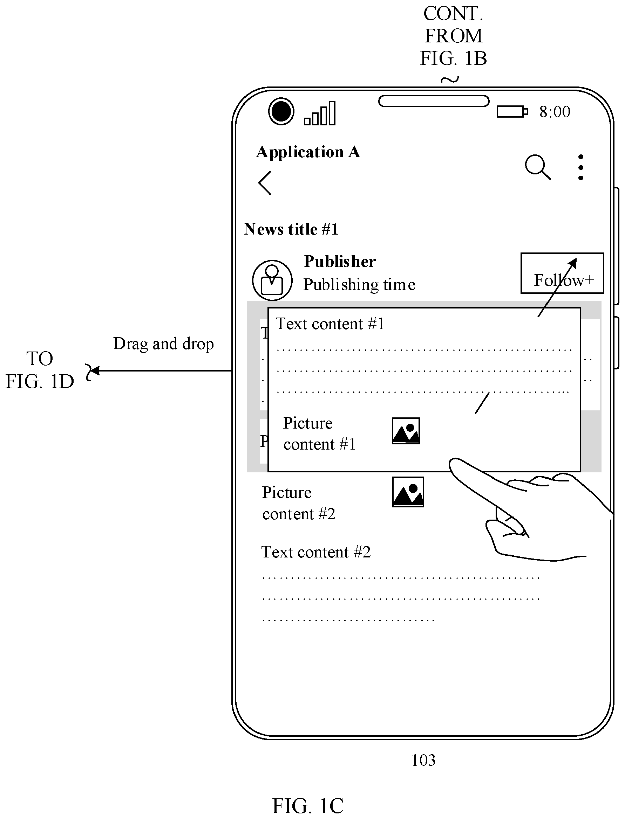

In this embodiment of this application, subsequent processing procedures of two operations, namely, the touch-and-hold and drag-and-drop operation and the three-finger swipe down operation are different, and different processing frameworks are invoked for different processing. The drag-and-drop operation in the interface 103 in FIG. 1C may be considered as an example of the second operation. The three-finger swipe down operation in the interface 104 in FIG. 2A may be considered as an example of the first operation.

In an implementation, step S802 may include: An interface of an AMS in the first processing framework is invoked to obtain a screenshot of the first interface; a global favorites middleware platform of the first processing framework is invoked to determine a view type included in the screenshot of the first interface; a second interface is displayed on the electronic device, where the second interface includes the screenshot of the first interface and at least one control, and the at least one control is determined based on the view type included in the screenshot of the first interface; and in response to a tap operation performed by the user on a first control in the at least one control, the first material is added to the second application in a collection form corresponding to the first control by using the first processing framework. In this implementation, cross-application collection is triggered by the three-finger swipe down operation. An interface screenshot needs to be obtained first, and a view type in the interface screenshot is determined. Then, a corresponding control is provided for the user, indicating a specific form in which the user collects the first material. Then, based on a manner in which the user taps a control, collection is performed in a collection manner indicated by the tapped control.

The interface 105 may be considered as an example of the second interface. The controls "content extraction", "webpage collection", and "screenshot collection" in the interface 105 may be considered as examples of the at least one control.

In an implementation, when the first control is a content extraction control, and when adding, in response to a tap operation performed by the user on a first control in the at least one control, the first material to the second application in a collection form corresponding to the first control by using the first processing framework, the method may include: All views in the screenshot of the first interface are traversed and filtered by using the global favorites middleware platform, to obtain a first sub-view set, where the first sub-view set includes at least one sub-view whose content is extractable; content of each sub-view in the first sub-view set is extracted by using the global favorites middleware platform and based on a view type of the sub-view, to obtain extracted content corresponding to the sub-view; a third interface is displayed on the electronic device after extraction of all sub-views in the first sub-view set is completed, where the third interface includes extracted content of the first sub-view set; in response to a selection operation performed by the user on target content in the extracted content of the first sub-view set in the third interface, the selected target content is determined as the first material; and in response to a tap operation performed by the user on a favorites confirmation control in the third interface, the first material is added to the second application by using the global favorites middleware platform. In this implementation, the user taps the content extraction control to trigger extraction of content in the entire screenshot. All sub-views whose content is extractable in the screenshot are traversed and filtered first, and then content of each sub-view is extracted based on a type of each sub-view. Then, all the extracted content is displayed in the third interface for the user to select, and collection is performed based on the user's selection. It should be understood that in this implementation, because whether the user wants to store content of an entire page or only a part of the content is unknown, or which part of the content the user wants to store is also unknown, the content of all sub-views in the entire screenshot is first extracted and set to a selectable state, thereby helping the user select which part the user wants to collect and store.

In an example, in the foregoing implementation, during traversing, for each view in the screenshot of the first interface, at least one of the following operations is performed: when the view is a standard view, a view type of the view is obtained in a manner of obtaining the standard view, or when the view is a custom view, a view type of the view is determined by using a suffix of the view; and a size and/or a location of the view is read. In this example, some or all of the information about the type, the size, and the location of the view is obtained during traversing. When the view type is obtained, different obtaining manners are employed separately based on whether the view is a standard view or a custom view.

In another example, in the foregoing implementation, during filtering, at least one of the following operations may be performed: only a view visible to the user in the screenshot of the first interface is retained, a hidden view in the screenshot of the first interface is removed, and a partially or completely blocked view in the screenshot of the first interface is removed. In this example, a view is filtered to some extent. In addition to a view visible to the user, an interface may further include a hidden view or another view that is not displayed in the interface but belongs to the interface. Therefore, only a view visible to the user may be retained, or a hidden view is removed. Both cases have equivalent effects. In addition, a partially or completely blocked view may be further removed.

In this example, when the partially or completely blocked view is removed, it may be further determined, based on a proportion of the blocked part, whether to remove the view. To be specific, for the blocked view, when a proportion of a blocked part of the view in the entire view is greater than or equal to a preset proportion threshold, the blocked view is removed. This manner can help retain content extraction of a view that is blocked but not seriously blocked, and that has a relatively large amount of valid content.

In the foregoing examples, different recognition methods for different views are provided. A standard view is a standard view definition manner in the field. Therefore, types of these views may be obtained in a standard obtaining manner in the field. However, for a view customized by an individual vendor, a view type may be determined based on a suffix that is set during customization. For example, a suffix of a textview may determine a view of a text type, and a suffix of an imageview may determine as a view of a picture type. Examples are no longer listed one by one. In addition, due to a limitation of a screen size, some views cannot be presented in the interface. For example, in the interface 104, news content may be quite long, and is not completely displayed on this page. Therefore, during recognition of the view, only the view visible to the user needs to be recognized, that is, the view in the interface. For another example, at a boundary of a screen, some views may be partially blocked. In this case, these views may also need to be filtered out. For example, it is assumed that there is a picture that is displayed only by half in a lowermost interface part of the interface 104. A view corresponding to this picture is a partially blocked view.

Both an interface 106 and an interface 107 may be considered as an example of a third interface. Content with a white background color in the interface 106 may be considered as an example of extracted content (selectable content) of the foregoing first sub-view set. A selection operation of touching and holding and then sliding in the interface 106 may be considered as an example of a selection operation on target content. Content with a dark gray background color in the interface 107 may be considered as an example of the target content.

It can be learned from the foregoing description that, in a collection process triggered by the three-finger swipe down operation, after to-be-collected content is determined, the user only needs to tap a favorites confirmation control in the third interface to add the to-be-collected content to the second application.

A "favorites" control in the interface 106 and the interface 107 may be considered as an example of the foregoing favorites confirmation control. In FIG. 3A, a tap operation on the "favorites" control in the interface 107 may be considered as an example of the foregoing tap operation on the favorites confirmation control in the third interface.

In another example, during traversing, for each view, whether the view is a standard view is first determined; and when the view is a standard view, a view type of the view is obtained in an obtaining manner of the standard view; or when the view is not a standard view, whether the webview is a custom view is determined; or when the view is a custom view, a view type of the view is determined by using a suffix of the view; or when the view is neither a standard view nor a custom view, the view is not added to the first sub-view set. This example is equivalent to setting a determining priority. Whether the view is a standard view is first determined. If the view is not a standard view, whether the view is a custom view is determined. If the view is neither a standard view nor a custom view, the view is discarded. This can ensure that recognition of the view is more refined.

In an implementation, the first sub-view set includes a sub-view of at least one view type of a text, a picture, an offline webpage, a file, a video, and a link; and when extracting, by using the global favorites middleware platform, content of each sub-view in the first sub-view set based on a view type of the sub-view, to obtain extracted content corresponding to the sub-view, the method may include: For each sub-view, when a view type of the sub-view is a text, a text extraction module in the global favorites middleware platform is invoked to obtain text data of the sub-view, and the obtained text data is determined as extracted content of the sub-view; or for each sub-view, when a view type of the sub-view is a picture, a picture extraction engine in the global favorites middleware platform is invoked to obtain a bitmap (bitmap) of the picture from the sub-view, and the bitmap is determined as extracted content of the sub-view, and/or a text processing module in the global favorites middleware platform is invoked to obtain text data included in the picture in an optical character recognition (optical character recognition, OCR) manner (an execution area of the OCR corresponds to the picture); or for each sub-view, when a view type of the sub-view is an offline webpage, a webpage extraction engine in the global favorites middleware platform is invoked to perform title extraction and content parsing on the webpage to obtain extracted content of the sub-view, where the extracted content of the sub-view includes an extracted title and parsed webpage content; or for each sub-view, when a view type of the sub-view is a file, a file extraction engine in the global favorites middleware platform is invoked to obtain a file path of the file, a copy file of the file or the file path of the file is determined as extracted content of the sub-view, and file information of the file is determined as the extracted content of the sub-view; or for each sub-view, when a view type of the sub-view is a video, a video extraction engine in the global favorites middleware platform is invoked, a playing area of the video is recognized by reading a video identifier (ID) that is written by the first application into an accessibility node, and screen recording is performed, a screenshot is taken, and/or a label is added, to obtain extracted content of the sub-view; or for each sub-view, when a view type of the sub-view is a link, an online link extraction engine in the global favorites middleware platform is invoked, and link information is obtained based on a uniform resource locator (uniform resource location, URL) field carried in an activity (activity) or in a manner of reading a uniform resource locator (getURL) from a webpage view webview, where the obtained link information is extracted content of the sub-view. In this implementation, different content extraction strategies are available for different types of views, so that the solution of this application can support content extraction for a plurality of types of views at the same time, rather than only content extraction for a single type of view.

In an example, when invoking, for each sub-view when a view type of the sub-view is a text, a text extraction module in the global favorites middleware platform to obtain text data of the sub-view, and determining the obtained text data as extracted content of the sub-view, the method may include: An intelligent recognition platform is invoked by using the text extraction module, so that the intelligent recognition platform obtains the text data of the sub-view in the OCR manner (an execution area of the OCR corresponds to a screenshot of an entire first interface), or the text data of the sub-view is obtained by using the text extraction module in a manner of reading information that is written by the first application into the accessibility node. In other words, for the sub-view of the text type, content extraction may be performed in two manners: OCR recognition or reading from the accessibility node.

In an implementation, when adding, in response to a tap operation performed by the user on a favorites confirmation control in the third interface, the first material to the second application by using the global favorites middleware platform, the method may include at least one of the following operations: directly adding a text material in the first material to the second application; storing a picture material in the first material into a gallery application, and adding a thumbnail of the picture to the second application, where the picture stored in the gallery application is associated with the thumbnail of the picture in the second application, and the thumbnail of the picture is a mapping element of the picture in the second application; storing an offline webpage material in the first material into a note application, and adding introduction content of the offline webpage to the second application, where the offline webpage stored in the note application is associated with the introduction content of the offline webpage in the second application, and the introduction content of the offline webpage is a mapping element of the offline webpage in the second application; storing a video material in the first material into the gallery application, and adding a thumbnail of a first frame of image of the video to the second application, where the video stored in the gallery application is associated with the thumbnail of the first frame of image of the video in the second application, and the thumbnail of the first frame of image of the video is a mapping element of the video in the second application; storing a file material in the first material into a file management application, and adding file information of the file to the second application, where the file stored in the second application is associated with the file information of the file in the second application, the file information of the file is a mapping element of the file in the second application, and the file information includes an icon of a file type and a file name; and directly adding a link material in the first material to the second application. In this implementation, description is provided that collection of different view types of materials (different types of materials) in the first material is completed according to different adding solutions. FIG. 6 and FIG. 7 also provide example description of the part of content, and details are not described again.

In another implementation, the first control is a webpage collection control, a link collection control, or a file collection control, and when adding, in response to a tap operation performed by the user on a first control in the at least one control, the first material to the second application in a collection form corresponding to the first control by using the first processing framework, the method may include: When the first control is the webpage collection control, the first material is added to the second application in a form of an offline webpage, where the first material is content of an entire webpage of a webpage displayed in the first interface; or when the first control is the webpage collection control, the first material is added to the second application in a form of an offline webpage, where the first material is content, displayed in an interface, of a webpage displayed in the first interface; or when the first control is the link collection control, the first material is added to the second application in a form of a link, where the first material is an online link of a webpage displayed in the first interface; or when the first control is the file collection control, the first material is added to the second application in a form of a file, where the first material is a file displayed in the first interface, and the file is an open document, a video displayed in full screen, or a picture displayed in full screen. In this implementation, an example of another collection form is provided, and a form of collected content is enriched, helping the user perform collection according to different requirements. In other words, the user may collect, in different manners according to different collection requirements, the content the user wants to collect.

In another implementation, when invoking a global favorites middleware platform of the first processing framework to determine a view type included in the screenshot of the first interface, the method may include: The view type included in the screenshot of the first interface is determined based on a whitelist configuration of the first application or a whitelist configuration of the first interface. In this implementation, the view type included in the screenshot is determined based on the whitelist configuration. Introduction of the whitelist configuration may help determine an extractable range in the interface, so that a customized constraint is added to the extracted content, and different whitelists may be set for different applications or different interfaces as required.

In another implementation, when displaying a second interface on the electronic device, where the second interface includes the screenshot of the first interface and at least one control, the method may include: When the view type included in the screenshot of the first interface includes a webpage, the at least one control includes at least one of the webpage collection control, the link collection control, and the content extraction control; or when the view type included in the screenshot of the first interface includes a file, the at least one control includes at least one of the file collection control and the content extraction control; or when the view type included in the screenshot of the first interface includes only a picture or a video, the at least one control includes at least one of the file collection control and the content extraction control. In this implementation, the control type displayed on the second interface is determined based on different view types included in the screenshot, thereby helping the user perform selection as required. For example, assuming that the first interface does not include the webpage view, it is unnecessary to display the webpage collection control in the second interface.

It should be understood that the view type included in the screenshot of the first interface is a type of a view that is allowed to be extracted in the first interface. For example, the interface 104 displays an online webpage, and does not include a video or a file. Therefore, the type of the view that is allowed to be extracted in the first interface includes an offline webpage, an online link, a text, and a picture. In other words, the view type included in the interface 104 includes an offline webpage, an online link, a text, and a picture. It is assumed that the interface displays a picture that is displayed in full screen. In this case, a view type that is allowed to be extracted in the interface includes a picture. It is assumed that the picture further includes a text. In this case, the view type that is allowed to be extracted in the interface further includes a text. Other cases are no longer listed one by one.

In another implementation, when adding, in response to a second operation performed by the user on the first interface, a second material in the first interface to the second application by using the second processing framework, the method may include: The second material selected by the user from the first interface is obtained by using a content recognition service in the second processing framework; a view type included in the second material is determined by using the content recognition service and based on touch-and-hold coordinates of the second operation; a view tree is traversed and searched by using a view recognizer in the second processing framework to obtain a sub-view whose content is extractable included in the second material, to obtain a second sub-view set, where the second sub-view set includes at least one sub-view whose content is extractable; content of each sub-view in the second sub-view set is extracted by using the content recognition service and based on a view type of the sub-view, to obtain extracted content corresponding to the sub-view; extracted content of the second sub-view set is obtained after extraction of all sub-views in the second sub-view set is completed; and the extracted content of the second sub-view set is added to the second application by using a WMS in the second processing framework and based on a view type included in the extracted content of the second sub-view set. In this implementation, global favorites are triggered by the drag-and-drop operation. Because an object needs to be first selected before drag-and-drop is performed, and start point coordinates for drag-and-drop (coordinates for touch-and-hold) may be obtained, a sub-view of selected content is determined in a manner of traversing and searching for all sub-views by using a view tree, instead of recognizing all sub-views in the entire interface. In this implementation, the user first selects an object (a second material) that the user wants to collect, and then performs view recognition on the second material and extracts content in a view, and collects the extracted content. The drag-and-drop operation in the interface 103 in FIG. 1C may be considered as an example of the touch-and-hold and drag-and-drop operation. FIG. 7 provides an example of the internal execution process and an example of the second processing framework in this implementation.

In an example, the second sub-view set includes a sub-view of at least one view type of a text, a picture, an offline webpage, a file, a video, and a link. In other words, at least one of a textview, an imageview, a webview, a fileview, a videoview, and an onlinelinkview is included.

When extracting, by using the content recognition service, content of each sub-view in the second sub-view set based on a view type of the sub-view, to obtain extracted content corresponding to the sub-view, the method may include: For each sub-view, when a view type of the sub-view is a text, text data is obtained in the OCR manner (an execution area of the OCR corresponds to the second material rather than the first interface), or the text data of the sub-view is obtained in a manner of reading information that is written by the first application into the accessibility node, and the obtained text data is determined as extracted content of the sub-view; or for each sub-view, when a view type of the sub-view is a picture, a bitmap of the picture is obtained from the sub-view, and the bitmap is determined as extracted content of the sub-view, and/or text data included in the picture is obtained in the OCR manner (an execution area of the OCR corresponds to the picture); or for each sub-view, when a view type of the sub-view is a file, a file path of the file is obtained, and a copy file of the file or the file path of the file is determined as extracted content of the sub-view; or for each sub-view, when a view type of the sub-view is a video, a playing area of the video is recognized by reading a video ID that is written by the first application into the accessibility node, and screen recording is performed, a screenshot is taken, and/or a label is added; or for each sub-view, when a view type of the sub-view is a link, link information is obtained based on a URL field carried in an activity framework activity or in a manner of getURL from a webpage, where the obtained link information is extracted content of the sub-view. In this example, based on triggering by the second operation, different content extraction strategies are available for different types of views, so that the solution of this application can support content extraction for a plurality of types of views at the same time, rather than only content extraction for a single type of view.

It should be understood that, in the case of the drag-and-drop operation, a case in which an offline webpage needs to be collected usually does not occur. For example, in the interface 104, selecting and then dragging an entire webpage cannot be performed.

It should be noted that the foregoing rules for traversing and filtering a sub-view and the whitelist configuration are also applicable to the case herein, and details are not described again.

In an implementation, when adding, by using a window management service in the second processing framework, the extracted content of the second sub-view set to the second application based on a view type included in the extracted content of the second sub-view set, the method may include at least one of the following operations: directly adding text content in the extracted content of the second sub-view set to the second application; storing picture content in the extracted content of the second sub-view set into the gallery application, and adding a thumbnail of the picture to the second application, where the picture stored in the gallery application is associated with the thumbnail of the picture in the second application, and the thumbnail of the picture is a mapping element of the picture in the second application; storing offline webpage content in the extracted content of the second sub-view set into the note application, and adding introduction content of the offline webpage to the second application, where the offline webpage stored in the note application is associated with the introduction content of the offline webpage in the second application, and the introduction content of the offline webpage is a mapping element of the offline webpage in the second application; storing video content in the extracted content of the second sub-view set into the gallery application, and adding a thumbnail of a first frame of image of the video to the second application, where the video stored in the gallery application is associated with the thumbnail of the first frame of image of the video in the second application, and the thumbnail of the first frame of image of the video is a mapping element of the video in the second application; storing file content in the extracted content of the second sub-view set into the file management application, and adding file information of the file to the second application, where the file stored in the second application is associated with the file information of the file in the second application, the file information of the file is a mapping element of the file in the second application, and the file information includes an icon of a file type and a file name; and directly adding link content in the extracted content of the second sub-view set to the second application. In other words, the foregoing methods for performing storage and displaying in the second application based on different material/content types are applicable to this step in both of the two trigger operations.

In an example, the foregoing process of recognizing the view and extracting content from the sub-view may include: A whitelist for content extraction on an application page is determined through offline measurement and troubleshooting (that is, a whitelist configuration is pre-defined according to an actual requirement), and a range of extractable content on the current page is preliminarily locked (that is, an extractable view on the page is determined); if global favorites are triggered by a touch-and-hold and drag-and-drop operation, a view tree is traversed by using coordinates of the current touch-and-hold to search for all sub-views whose content is extractable; if three-finger swipe down is performed, the range of extractable content is determined by priority based on the whitelist configuration, and at the same time, the view of the extractable content on the current page is traversed and filtered to obtain a sub-view of the extractable content as required; content extraction is performed for each type of view according to a plurality of different rules and based on the sub-view of the extractable content obtained in the previous step, and if a text is involved, an OCR capability may be used to recognize a text on the current page or read information that is written by the application into the accessibility node; if a webpage is involved, title extraction and content parsing are performed in a readability manner; if a video is involved, a video playing area is automatically recognized by reading a video ID that is written by the application into the accessibility node, and screen recording is performed/a screenshot is taken/a label is added, and so on; if a picture is involved, a bitmap of the picture is obtained from the sub-view to generate the picture; if a file is involved, a file path is obtained, and copying or path mapping is performed as required; if an online link (link) is involved, the link is obtained based on the URL field carried in the activity or in the manner of reading a uniform resource locator (getURL) from a webpage view (webview).

In an implementation, the method shown in FIG. 8 further includes steps S803 and S804.

S803: Display a snackbar on the electronic device, where the snackbar includes a prompt indicating a collection success and a view control.

S804: In response to a tap operation performed by the user on the view control, start the second application, and display an adding result of the to-be-collected content in an interface of the second application.

In the solution shown in FIG. 8, two processing frameworks are designed, so that different processing frameworks can be invoked based on different user operations to achieve a purpose of cross-application collection, thereby making an entire collection process more flexible and diverse, which can meet a plurality of forms of collection requirements of the user, and further helping the user collect different types of materials as required. The two trigger operations have different features, and are respectively designed with two processing frameworks, thereby effectively improving processing efficiency.

The following describes content of another solution.

As described above, during extraction of an interface material, for each view, a type of the view may be first determined and then extraction is performed based on the type of the view. However, the material types are diverse, and different materials also have different characteristics. The materials that need to be extracted in the examples in FIG. 1A-FIG. 3C include a plurality of forms of views (view) such as a webpage, an online link, a text, and a picture. In addition, descriptions of other collection scenarios that may further include collection of materials of types such as a file and a video are provided. How to extract various types of materials is particularly important. Therefore, to improve extraction efficiency, this application further provides a method for extracting a page material. All views of different material types are first aggregated, and then each type of material is separately extracted.

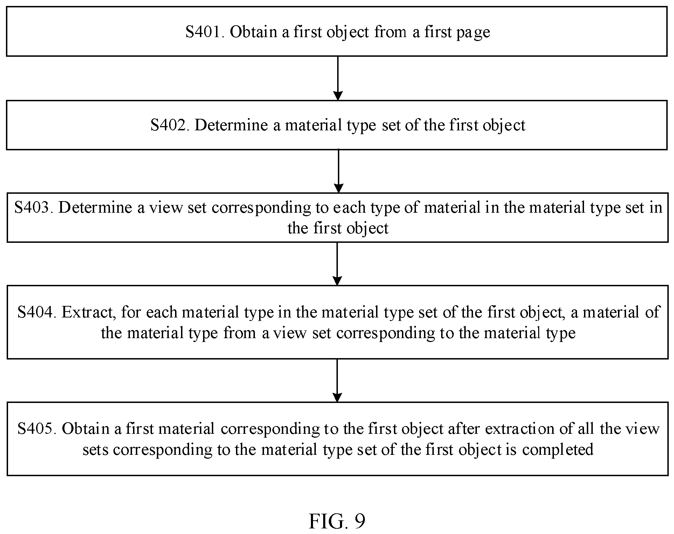

FIG. 9 is a schematic flowchart of a method for extracting a page material according to an embodiment of this application. It can be seen that the method shown in FIG. 9 is an important part of the global favorites in FIG. 1A-FIG. 3C, and helps implement the functions shown in FIG. 1A-FIG. 3C as a whole. The following describes steps shown in FIG. 9.

S401: Obtain a first object from a first page.

The first page is a display interface of a first application that is running on an electronic device, and the first object includes a view (view) whose material is to be extracted. The first application may be, for example, the application A shown in FIG. 1A-FIG. 3C. The first page may be, for example, an interface 101 and an interface 104. The first object may be, for example, a selected text+picture in a floating state shown in the interface 103. The first object may be, for another example, an interface screenshot shown in the interface 105. The first object may alternatively be an entire webpage corresponding to the interface 104 and/or an online link thereof. Other cases are no longer listed one by one.

S402: Determine a material type set of the first object.

The material type set includes at least one material type of the text, the picture, the file, the webpage, the video, and the online link.

The material type refers to a specific form in which the user finally wants to extract content of the material. The material type is a concept different from the view type. The former aims at the content, whereas the latter aims at a carrier form of the content or is understood as a presentation form of the content.

FIG. 1A to FIG. 1D are used as examples. The first object is a text paragraph and a picture that are selected. A material type corresponding to this text paragraph is a text, and a material type corresponding to this picture is a picture. FIG. 2A to FIG. 2D are used as examples. The first object is an entire interface 104. A material type includes a text, a picture, a webpage, and an online link. A text material is, for example, text content in the interface 104, a picture is, for example, a picture in the interface 104, and a webpage material is, for example, a news webpage in the interface 104. The webpage material refers to the webpage, and the online link material refers to an online link of the webpage. Other cases are no longer listed one by one.

S403: Determine a view set corresponding to each type of material in the material type set in the first object.

Each type of material corresponds to one view set, and each view set includes all views for which a material of a material type corresponding to the view set is extractable.

It should be understood that the material type and the view type are two different concepts. The material type refers to a form of content to be saved, for example, saved as a text, a picture, a video, or a file. However, the view type refers to a form of a carrier when different content is displayed on the electronic device. For example, an interface may include a text, a picture, and a video. A carrier for carrying the text, the picture, and the video in the electronic device is referred to as a view.

For example, the webview may include materials such as a text, a picture, a video, and an online link. For the picture material, the picture view includes the picture material, the file view may also include the material, and the webview may also include the picture material. Therefore, in this embodiment of this application, for a purpose of extracting a page material, considering different types of carriers (that is, view) of different materials, a material type included in a selected object (the first object) is first determined, and then for each material type, all views that include this material are found from the first object.

S404: Extract, for each material type in the material type set of the first object, a material of the material type from a view set corresponding to the material type.

In an implementation, when the material type set of the first object includes a text material, a view set corresponding to the text material includes at least one of a text view, a picture view, a file view, and a webview; and when extracting, for each material type in the material type set of the first object, a material of the material type from a view set corresponding to the material type, the method may include: When the text material is extracted from the view set corresponding to the text material, text data in each view in the view set is extracted based on an obtaining manner of the first object, and the extracted text data is determined as the text material extracted from the first object. In this implementation, for the text material, views that include text data, namely, the text view, the picture view, the file view, and the webview, are found from the first object and added to the view set of the text material. Extraction is performed based on the obtaining manner of the first object because different obtaining manners of the first object play a specific role in determining content included in the view set.

In an implementation, when extracting, when the text material is extracted from the view set corresponding to the text material, text data in each view in the view set based on an obtaining manner of the first object, and determining the extracted text data as the extracted text material, the method may include:

When the obtaining manner of the first object is a touch-and-hold and drag-and-drop operation on the first object, where the view set corresponding to the text material includes a text view and further includes a file view and/or a webview, text data in the text view is extracted according to a preconfigured extraction rule in a configuration file corresponding to the first object, or when the first object does not have a corresponding configuration file, text data in the text view is extracted according to a custom extraction rule; or
when the obtaining manner of the first object is a three-finger swipe down operation in the interface, where the view set corresponding to the text material includes a picture view of an interface screenshot of the first interface, a text is extracted from the picture view in the optical character recognition (optical character recognition, OCR) manner.

In this implementation, for the touch-and-hold and drag-and-drop operation, coordinates for touch-and-hold may be determined, and a case in which a text can be dragged and dropped includes only drag-and-drop after a text paragraph is selected from a common interface or a file or webpage display interface. Therefore, in the case of the touch-and-hold and drag-and-drop operation, the view set certainly includes a text view, and may further include a file view or a webview corresponding to the first interface. In this case, text data in the text view may be extracted according to a preconfigured rule or a custom extraction rule. It should be understood that, when a text paragraph is selected from a common interface, an open file, or an open webpage, it is equivalent to that the file view and the webview include a text view, and the first object is obtained by the drag-and-drop operation after selection is performed, and is only a part of the first interface rather than an entire interface. Therefore, in the case of the touch-and-hold and drag-and-drop operation, when the text material is extracted, a view corresponding to the entire interface does not need to be considered, and only a text view in selected content needs to be considered. For the three-finger swipe down operation, because the operation is performed on the entire page and no content is pre-selected, the first object may correspond to the entire page, or may be an entire webpage or file corresponding to the page. Therefore, in the case of the three-finger swipe down operation, the text material corresponds to the entire picture view of the interface screenshot.

In another implementation, when extracting, when the first object does not have a corresponding configuration file, text data in the text view according to a custom extraction rule, the method may include:

The text data of the text view is read from an accessibility node (AccessbilityNodeInfo) corresponding to the text view; or
when the text data of the text view fails to be read from the AccessbilityNodeInfo, text content is read from a text obtaining interface (getText) corresponding to the text view; or
when the text data of the text view fails to be read from the AccessbilityNodeInfo or the getText, a text view identifier (ViewID) is obtained in a manner of directly invoking a view, and then the text data of the text view is obtained based on the text ViewID; or
when the text data fails to be read from the AccessbilityNodeInfo, the getText, or the ViewID, the text data is obtained from a view character obtaining interface (getViewString) of the text view in a manner of directly invoking a view.

In this implementation, the custom extraction rule is some execution strategies that are sorted based on an execution priority. Reading is first preferentially performed from the accessibility node. This needs to depend on that the first application writes data into the accessibility node. Currently, most applications meet this condition. When a few applications do not meet this condition or reading fails for another reason, another manner of reading data is then successively attempted. The foregoing strategies are sorted from simple to complex from front to back, and an attempt is made preferentially from a simplest reading manner.

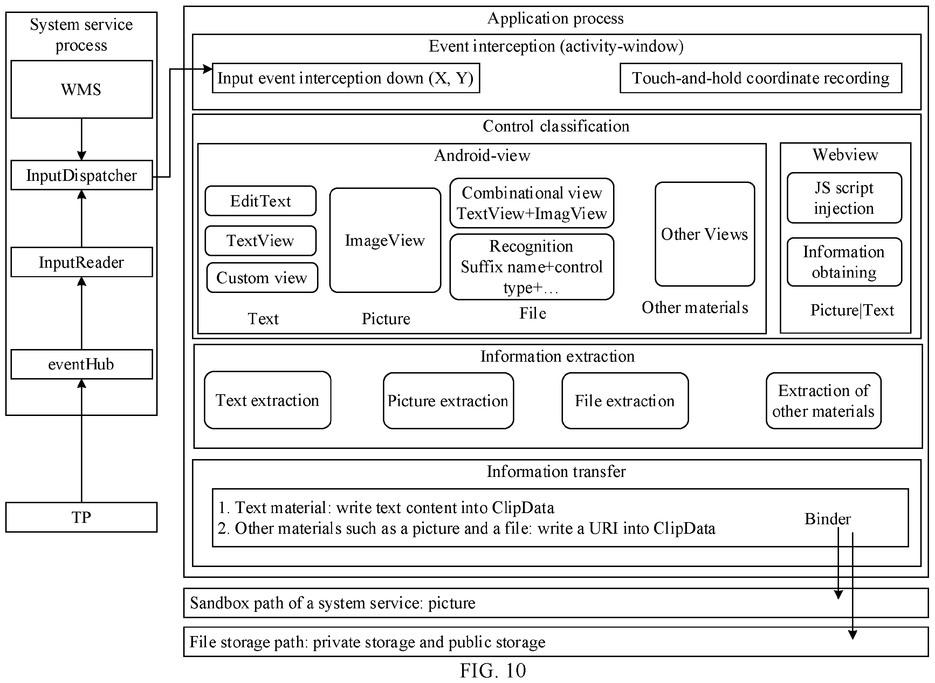

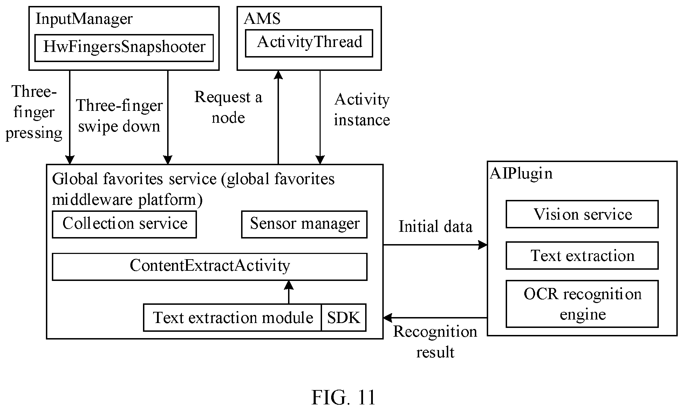

In the following description, FIG. 10 provides an example of how to obtain text data in a drag-and-drop scenario (a touch-and-hold and drag-and-drop operation scenario). FIG. 11 provides an example of extracting text data through OCR recognition in a three-finger swipe down scenario (a three-finger swipe down operation scenario).

In another implementation, when the material type set of the first object includes a picture material, a view set corresponding to the picture material includes at least one of a picture view, a webview, and a custom view; and
when extracting, for each material type in the material type set of the first object, a material of the material type from a view set corresponding to the material type, the method may include:
At least one view that includes a picture of a standard picture view, the webview, and the custom view is determined from the view set corresponding to the picture material based on a configuration corresponding to a view name or an application name;
for the standard picture view, a bitmap (bitmap) of the standard picture view is obtained in a manner of reading a storage interface of the picture, and the bitmap of the standard picture view and a uniform resource identifier URI of the bitmap of the standard picture view are determined as a picture material extracted from the first object;
for the webview, a bitmap and a URI of a picture in the webview are obtained in a manner of injecting a JS script, and the bitmap of the webview and the URI of the bitmap of the webview are determined as a picture material extracted from the first object;
for the custom view, a bitmap is copied in a manner of traversing and searching a key attribute in the custom view, and the bitmap of the custom view and a URI of the bitmap of the custom view are determined as a picture material extracted from the first object; and
for the custom picture view, when the bitmap fails to be found from the key attribute, a bitmap of the custom picture view is drawn, and the bitmap of the custom view and a URI of the bitmap of the custom view are determined as a picture material extracted from the first object.

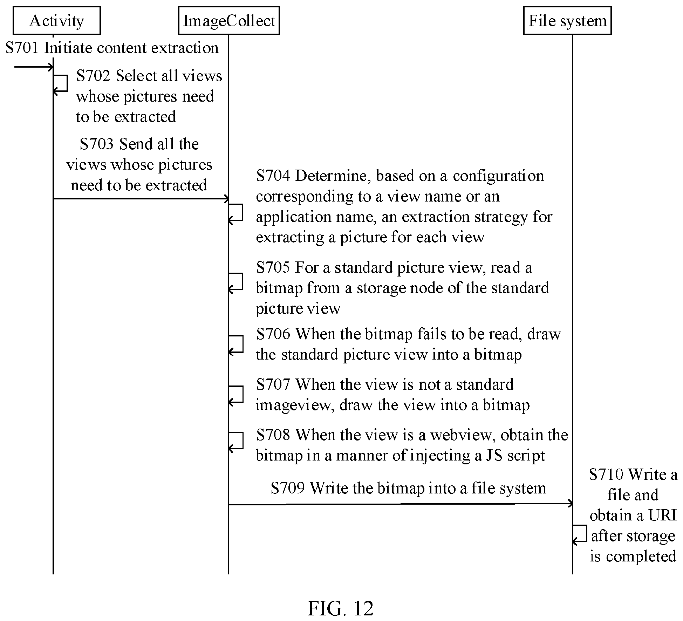

In this implementation, different extraction strategies are determined and executed based on whether the view is a picture view and whether the view is a standard picture view. The standard picture view is an imageview, and a picture may also exist in the webview. Therefore, it is separately noted that in the non-standard picture view, namely, the custom view, if the bitmap can be found, the bitmap of the custom view is read, or if the bitmap is not found, the bitmap of the custom view is directly drawn. FIG. 12 provides an example of a process of extracting a picture. According to the foregoing extraction strategies, a picture material may be extracted regardless of whether the view is a standard picture view, and there is a bottom line strategy for directly drawing a bitmap, thereby ensuring that pictures in all views that include pictures can be extracted.

In an example, when obtaining, for the standard picture view, a bitmap of the standard picture view in a manner of reading a storage interface of the picture, the method may include: The bitmap of the standard picture view is read from a storage node of the standard picture view; or when the bitmap of the standard picture view fails to be read, a bitmap of the standard picture view is drawn.

In an example, an execution strategy for searching for the bitmap of the standard picture is provided, and the bitmap is preferentially read from the storage node, and the bitmap is directly drawn if not found. According to the foregoing strategies, even if the bitmap fails to be read, there is a bottom line strategy for directly drawing the bitmap, thereby ensuring that pictures in all views that include pictures can be extracted.

In an implementation, when the material type set of the first object includes a file material, a view set corresponding to the file material includes a file view; and when extracting, for each material type in the material type set of the first object, a material of the material type from a view set corresponding to the material type, the method may include:

When the first object is a file selected from the first page, the obtaining manner of the first object is a touch-and-hold and drag-and-drop operation on the first object, and the view set corresponding to the file material includes only the file view, file information of the file view in the first object is directly extracted, whether the file exists in a storage path of the file view is searched, and when the file exists in the storage path of the file view, the file is copied and a URI of the copied file and the extracted file information are determined as a file material extracted from the first object; or
when the first page is a display page of an open file, the first object is the open file, the obtaining manner of the first object is a three-finger swipe down operation on the first page, and the view set corresponding to the file material includes a file view corresponding to the open file, and further includes a text view and/or a picture view, pre-storage space is searched for file information of the open file, the file is copied based on a file path indicated by the read file information, and a URI of the copied file and the read file information are determined as a file material extracted from the first object; or when the file information of the open file fails to be found from the pre-storage space in a preset time period after the three-finger swipe down operation occurs, the file information of the open file is obtained by using a field of an activity activity, the file is copied based on a file path indicated by the obtained file information, and a URI of the copied file and the obtained file information are determined as a file material extracted from the first object, where the pre-storage space includes file information of all detected open files.

In this implementation, different strategies for extracting the file view are respectively provided for the drag-and-drop scenario and the three-finger swipe down scenario. For file collection, in the drag-and-drop scenario, drag-and-drop is certainly performed after one or more files included in the interface are selected. Whether these files are open does not need to be concerned. Therefore, only operations such as extracting the file information are required. In the three-finger swipe down scenario, an interface (the first page) is certainly currently being displayed. This interface displays a file that is being opened and displayed. Three-finger swipe down is three-finger swipe down in an open file. In this case, the file view in the selected first object is certainly a file view corresponding to the opened and displayed file. In this case, file information of the file needs to be found from file information of all pre-stored open files, and then the file is traced back for copying and URI extraction.

In an example, when directly extracting, when the first object is a file selected from the first page, the obtaining manner of the first object is a touch-and-hold and drag-and-drop operation on the first object, and the view set corresponding to the file material includes only the file view, file information of the file view in the first object, searching whether the file exists in a storage path of the file view, and when the file exists in the storage path of the file view, copying the file and determining a URI of the copied file and the extracted file information as a file material extracted from the first object, the method may include: Whether the first application accesses a file drag-and-drop framework is determined; and the URI of the open file is directly obtained when the first application accesses the file drag-and-drop framework; or when the first application does not access the file drag-and-drop framework, a file path of the open file is scanned and searched for by using a file name of the open file, to obtain the URI of the open file.

In this example, if the application (the first application) itself supports drag-and-drop of a file, a URI of the file can be directly found. However, if the application does not support drag-and-drop of a file, the file still needs to be traversed and searched in the file system.

In another implementation, when the material type set of the first object includes a webpage material, a view set corresponding to the webpage material includes a webview; and when extracting, for each material type in the material type set of the first object, a material of the material type from a view set corresponding to the material type, the method may include: A title and body text content of the webview in the first object are extracted in a manner of reading and parsing a readability file, and the extracted title and body text content are determined as a webpage material extracted from the first object.

In this implementation, for the webview, a webpage material in a form of an offline webpage is extracted in a manner of parsing content in the webview.

In another implementation, when the material type set of the first object includes a video material, a view set corresponding to the video material includes a webview; and when extracting, for each material type in the material type set of the first object, a material of the material type from a view set corresponding to the material type, the method may include: A video playing area in the first page is determined in a manner of reading video configuration information that is written by the first application into the accessibility node, at least one operation of performing screen recording, taking a screenshot, and adding a label is performed on a video being played, to obtain video excerpt content, and the obtained video excerpt content and a URI of the video excerpt content are determined as a video material extracted from the first object.

In this implementation, the video material is certainly some or all excerpts of a video that is played in the webview or a view similar to the webview. Excerption is a process, and therefore is equivalent to recording and extraction for a period of time. A video playing area is first locked (for example, when there is no full-screen playing of a video on a webpage), and then an operation such as performing screen recording or taking a screenshot is started to excerpt a segment or all of the video, to obtain a video excerpt material, which may also be referred to as a video material.

It should be noted that, for a video, in addition to storing an excerpt of the video, an online link of the video may be further stored. An online link material is extracted in a manner of extracting an online link. This case does not belong to extraction of a video material. In addition, a video in a case in which a video file is mutually transmitted in a chat application exists in a form of a file. The video file needs to be selected based on the drag-and-drop scenario and then be dragged and dropped. Therefore, reference may be made to extraction of the file material, but the extracted file material is a video.

It may be understood that a video in a material in the favorites space is mainly obtained through collection in a manner of dragging and dropping a video file, and a video excerpt material may be excerpted from a video playing page. If a link of a video is stored into the favorites space, the essence of this material is an online link, but the online link is associated with the video.

In another implementation, when the material type set of the first object includes an online link material, a view set corresponding to the online link material includes at least one of an online link view and a webview; and when extracting, for each material type in the material type set of the first object, a material of the material type from a view set corresponding to the material type, the method includes: The online link material is obtained based on the uniform resource locator (uniform resource location, URL) field carried in the activity (activity) module or in the manner of reading the uniform resource locator (getURL) from the webview.

In this implementation, the online link may be searched for from the field carried in the activity, or be read from the webview. Some views are not webviews, but have a similar property to the webview, and also have corresponding links, for example, an online editing scenario of a shared document that frequently occurs in a work application. Other cases are no longer listed.

In an example, when obtaining the online link material based on the URL field carried in the activity or in the manner of getURL from the webview, the method may include: When the webview corresponding to the first page is a standard webview, an online link of the standard webview is obtained directly in the getURL manner, where the obtained online link is an online link material extracted from the first object; or when the webview corresponding to the first page is a custom webview, a name of the webview is matched from configuration information of the first page to find the custom webview corresponding to the first page, and then an online link of the custom webview is obtained in the getURL manner, where the obtained online link is an online link material extracted from the first object; or when the webview corresponding to the first page is neither a standard webview nor a custom webview, an online link of the webview is obtained from the URL field carried in the activity.

In this example, different manners of obtaining an online link are employed respectively based on whether the text view is a standard webview, a custom webview, or neither the standard webview nor the custom webview.

S405: Obtain a first material corresponding to the first object after extraction of all the view sets corresponding to the material type set of the first object is completed.

In other words, the first material is a material extracted from the first object.

It should be understood that, although the first object may include many types of materials, not all materials are necessarily extracted, and some of the materials may be selected based on the user's selection for extraction. Especially, in a three-finger swipe down scenario, no object is clearly selected before a material is extracted, and the first object may correspond to some content or all content in the first interface, and may alternatively correspond to a webpage or a file corresponding to the first interface.

In an implementation, the foregoing method further includes: In response to a tap operation performed by the user on an extraction control, a material type corresponding to the extraction control in the first object is selected and added to the foregoing material type set.

In an implementation, the foregoing method further includes: The first material is shared with a second application. In other words, the extracted material may be shared with the application for management, collection, or use. The second application may be, for example, the favorites space.

In the method shown in FIG. 9, based on a material type included in a selected object, a view that is in the selected object and that includes the type of material is locked, and then material extraction is performed by category, thereby meeting diversified material extraction requirements. The extracted page material may be subsequently used to collect and merge a document, or share the document with another application or another device.

It should be further understood that FIG. 9 is a solution for first determining a type of a material that needs to be extracted from a selected object, and then extracting different materials for different views. In addition to this solution, it may be further considered that all view types included in the selected object are first determined, and then for each view in each view type, a material in the view is extracted. However, in this manner, it may further need to be determined which materials can be extracted from each view and which materials need to be extracted from the view. A view that includes only one type of material, for example, a text view and a picture view, is relatively simple. However, a file view and a webview are usually combinational views. For example, the file view may further include a text view and a picture view, and may even further include a video view. Therefore, when a material needs to be extracted from such a view, it is still necessary to perform separate extraction by using methods for extracting different materials in different views. This manner may lead to execution of unnecessary extraction. In addition, the extraction strategy determines, by using a material type, different extraction frameworks that need to be invoked, and then different extraction strategies are employed based on a difference of views in different extraction frameworks. Therefore, in the foregoing manner, for a same view, different extraction frameworks need to be constantly switched to extract different materials until extraction is completed. However, when the material is extracted from all views that include the material, the same extraction framework is invoked, but different extraction strategies for different views may be employed after the same framework is invoked.

FIG. 10 is a schematic diagram of a page material extraction framework in a touch-and-hold and drag-and-drop operation scenario according to an embodiment of this application. FIG. 10 may be considered as an example of an execution framework for extracting a page material based on triggering by a touch-and-hold and drag-and-drop operation, or in a touch-and-hold and drag-and-drop scenario (or a drag-and-drop scenario).

As shown in FIG. 10, the execution framework includes an application process and a system service (system server) process. The system service process is mainly used to provide a framework service such as a background resource for an execution process in the application process. The application process includes an event interception process, a control classification process, an information extraction process, an information transfer process, and an information storage process.

The time interception process intercepts a drag-and-drop event mainly by using an activity window (activity-window). In practice, after receiving an input event reported by a TP, an event sensing module (eventHub) in the system service process reports the input event to an input dispatching module (InputDispatcher) by using an input reading module (InputReader). A window management service (WindowManagerService, WMS) manages the input dispatching module, and the InputDispatcher reports the input event to the application process. The activity-window in the application process intercepts an input event. Herein, the input event is a touch-and-hold and drag-and-drop event. In the case of touch-and-hold, coordinates (down(X, Y)) of a touch-and-hold location may be detected. The activity-window further records coordinates of touch-and-hold by using a touch-and-hold coordinate recording module.

The control classification process mainly determines a classification of a view and a type of a material that is included in each type of view. In an Android (android) system, the view includes a correspondence view of a material such as a text, a picture, a file, and a webpage (webview). The text material mainly exists in an editable text (EditText), a text view (TextView), and a custom view. The picture material mainly exists in a standard picture view (ImageView) and a non-standard imageview, for example, a custom view and a webview. The file may include a combinational view, which may be, for example, a combination of the text view (TextView) and the picture view (ImageView). During recognition of a view type, the view type may be recognized based on a suffix of the file and a control type. The Webview may also include text and/or picture materials, and the like. Information in the Webview may be obtained in a manner of injecting a JS script. Other materials are mainly a video material, an online link material, and the like. The video material may mainly exist in the webview, the file view, and the custom view. The online link material mainly exists in the webview and the custom view.

The information extraction process includes text extraction, picture extraction, and file extraction. It should be understood that, in a drag-and-drop operation scenario, when one picture or several pictures are dragged and dropped for collection, these pictures exist in a file form. Therefore, this is equivalent to drag-and-drop of a file. Drag-and-drop of an entire video file is also equivalent to drag-and-drop of a file. For example, the video file may be a mutually shared video file in a chat application. After the video file is downloaded, touching and holding and then dragging and dropping a video thumbnail of the video file mean dragging and dropping the entire video file in a file form.

During text extraction, the text may be obtained by using AccessbilityNodeInfo, getText, getViewID, or a view character storage interface (getViewString). During picture extraction, a bitmap (bitmap) of the picture may be obtained. For file extraction, when there is a file drag-and-drop framework, a file path is directly obtained. If there is no file drag-and-drop framework, a uniform resource identifier (uniform resource identifier, URI) of the file is obtained in a manner of searching for a file path through file name scanning. For extraction of another material, a view set of the material is locked according to a custom extraction strategy, and then the material is extracted from the view set.

During text extraction, if a third-party application writes text data into the AccessbilityNodeInfo, data may be directly obtained from the AccessbilityNodeInfo. If the third-party application does not write text data into the AccessbilityNodeInfo, data may be obtained from another interface that stores editable text data, for example, the getText herein. If there is a text in a view state only, an identifier of the text view may be found, and then the text data may be obtained based on the viewID. For the text in the view state only, if no data is found based on the viewID, the text data may be obtained from the getViewString. In actual application, different applications have some features and configuration parameters, that is, configuration files. Therefore, how to obtain text data may alternatively be determined from the configuration files. For example, assuming that configuration description about writing text data into the AccessbilityNodeInfo can be found in the configuration file, the text data may be directly obtained from the AccessbilityNodeInfo, without a need to attempt another manner. For another example, assuming that configuration description about writing text data into the getText but not writing the text data into the AccessbilityNodeInfo can be found in the configuration file, the text data may be directly obtained from the getText, without a need to attempt another manner. Other cases are no longer listed one by one.

During information transfer, for text information, text content is directly written into a clipboard baseclass (ClipData); for other materials such as a picture and a file, URIs of the other materials are written into the ClipData.

The extracted materials may be respectively stored by using a binder communication channel and according to different storage strategies corresponding to different materials. For example, the text material may be directly stored in storage space of the favorites space, and the picture material may be stored in storage space of a gallery, and so on. Details are not described again.

Private storage and public storage mean that storage restrictions are set for some applications. Stored content being not shared with another application belongs to private storage of the application. The public storage refers to storage space that can be used by all applications.

For file extraction, it should be understood that, because it is already known under a drag-and-drop operation that the file is dragged and dropped, and a mapping link of the file is dragged and dropped, instead of drag-and-drop on a display page of the file after the file is opened. Therefore, the file may be directly extracted based on a file path of the file, without a need to monitor whether the file is opened.

FIG. 11 is a schematic diagram of an execution framework for extracting a text material based on OCR according to an embodiment of this application. It should be noted that FIG. 11-FIG. 16 include extraction frameworks for different materials. For a same module, function description of the same module may be used for mutual reference. For brevity, repeated description is no longer provided in each figure. FIG. 11 shows an example of an execution framework for extracting a text material in a three-finger swipe down scenario.

As shown in FIG. 11, an input manager (InputManager) is configured to obtain a three-finger pressing operation (used to start a global favorites service) and a three-finger swipe down operation (used to trigger the global favorites service). A finger recognition (HwFingersSnapshooter) module in the input processor is configured to recognize gesture operations of three-finger pressing and three-finger swipe down.

The input processor sends various obtained operations to the global favorites service (global favorites middleware platform). The global favorites middleware platform includes a collection service (CollectionService) module, a sensor manager (SensorManager), an activity instance extraction (ContentExtractActivity) module, and a text extraction module (TexExtractClient).

Each extraction engine/module in the global favorites middleware platform extracts activity examples based on triggering by the gesture module, and starts and dispatches a corresponding process by using an activity management service (activity manager service, AMS), to perform a subsequent operation.

The global favorites middleware platform may request a node (resquestContentNode) from the AMS, and the AMS transfers an activity instance based on a request and by using an activity thread (ActivityThread) feedback node, thereby sending the screenshot of the interface during the three-finger swipe down operation to the global favorites middleware platform.

In other words, after the three-finger swipe down, the global favorites middleware platform obtains a bitmap and an activity instance of the current page screenshot.

The global favorites platform sends, to the intelligent recognition platform AIPlugin, initial data, namely, to-be-recognized data, which is the bitmap and/or the activity instance of the current page screenshot, and receives a recognition result. The intelligent recognition platform includes a vision service (VisionService), text extraction (TextConfiguration), and an OCR recognition engine (OcrDetectEngine). The VisionService is used to recognize a view in the interface, the TextConfiguration is used to recognize a text object, and the OcrDetectEngine is used to recognize a text in a picture, that is, recognize the text in the picture (a page screenshot) based on a character shape. Because the global favorites middleware platform receives the interface screenshot sent by the AMS, both the text in the interface screenshot and the text in the picture in the interface screenshot can be recognized through the OCR.

The global favorites middleware platform requests OCR recognition from the AIPlugin, and then sends the interface screenshot to the AIPlugin and receives a text recognized by the OCR.

It should be further understood that for content extraction for an interface screenshot, extraction of a text material in the interface screenshot is mainly considered herein. However, in fact, the interface may further include a picture. In this case, a picture included in the interface screenshot needs to be extracted by using a picture extraction engine in the global favorites, and then the extracted picture and the foregoing text data recognized through the OCR are combined and arranged in a coordinate sequence, thereby obtaining a content extraction result of the entire interface, where the extraction result may include only a text, or may further include a picture.

With reference to FIG. 2A to FIG. 2D and FIG. 3A to FIG. 3C, when the user performs the three-finger pressing operation in the interface 104, the pressing operation is obtained by the input processor and is transferred to the global favorites service middleware platform, and then the global favorites service middleware platform starts the global favorites service. When the user performs the three-finger swipe down operation on the basis of the three-finger pressing operation, the three-finger swipe down operation is obtained by the input processor to the global favorites service middleware platform and is transferred to the global favorites service middleware platform. Then, the collection service module in the global favorites service middleware platform collects the content in the interface, requests a node from the AMS, and displays the interface 105 in a manner of an activity instance. When the user taps content extraction in the interface 105, the input processor obtains the tap operation and transmits the tap operation to the global favorites service middleware platform. The text extraction module in the global service middleware platform is linked with the intelligent recognition platform to perform content extraction for the interface screenshot, thereby determining a display result of the text shown in the interface 106.

It should be further noted that view recognition+OCR recognition is essentially different from conventional recognition of an image edge recognition algorithm. For the conventional recognition of the image edge recognition algorithm (for example, a ROI recognition detection algorithm), various elements in a picture may be recognized by using an edge, for example, a person, a thing, or even a text in the picture, but the picture cannot be recognized. In particular, in the solution in this embodiment of this application, after a screenshot of an interface is taken, OCR recognition and picture view extraction are performed on the basis of the interface screenshot. However, if the image edge detection algorithm is used, it is impossible to lock which small pictures or which texts are included in a big picture, but it is only possible to recognize all possible targets such as a person and a thing in the entire big picture.

FIG. 12 is a schematic flowchart of extracting a picture material according to an embodiment of this application. The following describes steps shown in FIG. 12.

S701: Initiate picture content extraction by using an Activity.

S702: In the Activity, select all views whose pictures need to be extracted.

Before a picture material is extracted, a view that includes a picture first needs to be found, mainly including a standard imageview, a webview, and a custom view.

S703: The Activity sends, to a picture collection module (ImageCollect), all the views whose pictures need to be extracted.

S704: In the ImageCollect, determine, based on a configuration corresponding to a view name or an application name, an extraction strategy that needs to be employed when a picture is extracted for each view.

In other words, for different types of views, when pictures in the views are extracted, manners that may be employed are different.

S705: In the ImageCollect, for the standard picture view, read a bitmap from a storage node of the standard picture view.

S706. In the ImageCollect, when the bitmap fails to be read, draw the standard picture view into a bitmap.

S707: In the ImageCollect, when the view is not a standard imageview, draw the view into a bitmap.

The non-standard imageview means a custom imageview.

S708: In the ImageCollect, when the view is a webview, obtain the bitmap in a manner of injecting a JS script.

In the foregoing extraction process, whether the view is a standard picture view, a webview, or a custom view is first determined, and then extraction is performed based on extraction manners of different types of picture views.

S709: The ImageCollect writes the bitmap into a file system.

S710: In the file system, write a file, and obtain a URI after storage is completed.

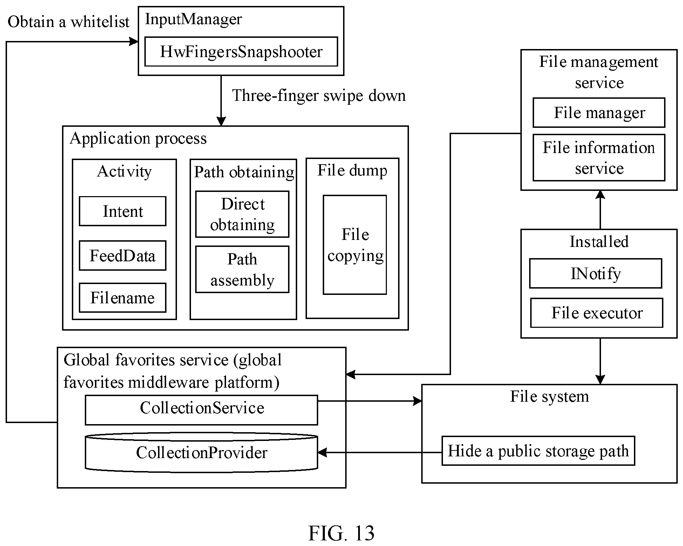

FIG. 13 is a schematic diagram of an execution framework for extracting a file material in a three-finger swipe down scenario according to an embodiment of this application. As shown in FIG. 13, after receiving a three-finger swipe down operation, the input processor sends the three-finger swipe down operation to the application process according to a whitelist indication. The Activity module in the application process includes an intent (Intent) module, a data flow (FeedData) module, and a file name (FileName) module that are configured to provide file-related data. A path obtaining module in the application process is configured to obtain a storage path of a file, and a file dump module is configured to copy the file. The file may not be copied when the file is already in the public storage space. When the file is in the private storage space, the file is copied to the public storage space or the storage space corresponding to the global favorites function, to prevent a failure of subsequently accessing the file due to a restriction of the application. A file management service is used to provide a service related to file material extraction for the global favorites. The file management service includes a file manager (FileManager) for managing a file and a file information service (FiledInfoProvider) for extracting file information. Herein, the file management service may monitor (detect) the file in real time, that is, detect an open file. Then, when file information needs to be viewed in the global favorites, the detected file information is sent to the global favorites middleware platform. A file installation module (Istalled) includes a command line tool Inotify and a file executor (FileExecutor), and is configured to provide a service for opening, viewing, and editing a file. Herein, the file installation module is further configured to search for a hidden public storage path from the file system, and send the hidden public storage path to a collection module CollectionProvider of the global favorites middleware platform.

Based on triggering by the three-finger swipe down operation, the global favorites middleware platform obtains, from the file management service, a file currently in an open state, that is, file information of the corresponding file when the three-finger swipe down operation is performed. For example, the three-finger swipe down operation may be performed on a display interface after a file A is open. The collection service CollectionService of the global favorites middleware platform sends the file information to the file system to search for a storage path corresponding to the file system, and stores a URI of the file into a database (data storage unit) of the CollectionProvider. The global favorites middleware platform further provides a whitelist for the input processor to guide whether extraction of a file material may be performed.

To be specific, the obtaining of the file material includes three manners: searching the detected file information, directly obtaining the file material by using the path obtaining module in the application process, or assembling and then obtaining the file material.

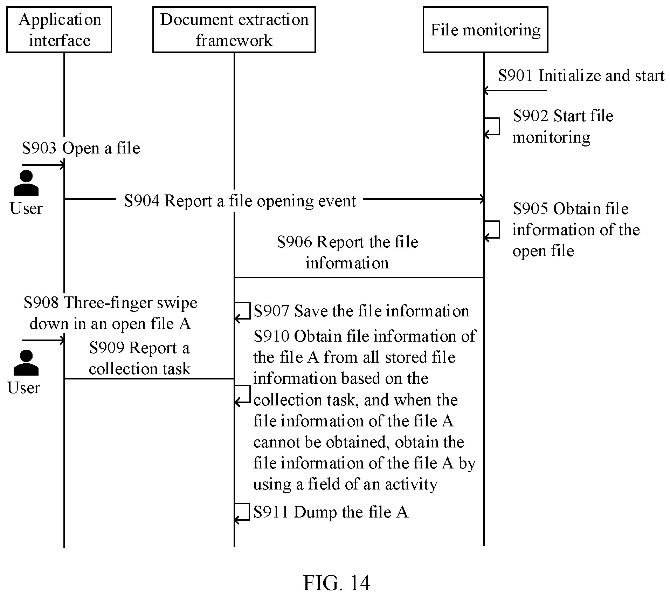

FIG. 14 is a schematic flowchart of extracting a file material in a three-finger swipe down scenario according to an embodiment of this application.

S901: A file monitoring module initializes and starts a file monitoring service.

S902: The file monitoring module starts to execute the file monitoring service, to monitor in real time whether there is an open file.

S903: A user opens any file in an application interface.

S904: The application interface reports a file opening event to the file monitoring module.

S905: The file monitoring module obtains file information of the open file.

S906: The file monitoring module reports the obtained file information to a document extraction framework.

S907: The document extraction framework saves the file information reported by the file monitoring module.

In an implementation, the storage herein may be storing only information about a file that is being opened and that is being displayed, that is, an open state in the application interface is presented to the user. Each time the user switches the application interface and consequently the file is no longer displayed in the interface, it is considered that the file is no longer open and is no longer in a state of being displayed. In this case, the file is deleted from the document extraction framework.

In another implementation, the storage herein may alternatively be storing file information of all files in an open state on the electronic device. In this case, the open state means that the file is opened on the electronic device, or is understood as a non-closed state. For example, two files are opened at the same time. One is displayed in the foreground, and the other is suspended in the background. Both files are open files. This manner is to prevent the user from temporarily viewing another file and then returning to continue to view the current file. If the current file is updated in a previous manner in real time, the current file changes to an unopened state first, and then the current file changes to an opened state again, causing unnecessary operations of deleting information and storing information again.

In another implementation, only file information of a file that is opened within a preset time period starting from a current moment is stored. For example, only file information of a file that is opened within 10 minutes may be stored. This manner may prevent file information of a file that has always not been closed by the user from always occupying storage space, and prevent excessive file information from being stored, in which case, searching needs to be performed from many pieces of file information during searching.

In still another implementation, only file information within a preset quantity threshold range is stored. For example, only file information of two or less files may be stored. This implementation is an operation of restricting storage of file information in terms of a storage quantity, so that the stored file information is within a specific range. The preset quantity threshold range may be set as required. For example, for a scenario in which a screen splitting operation is not supported, a plurality of files cannot be displayed at the same time, and in this case, a relatively small value may be set. For a scenario in which displaying a plurality of files on a plurality of screens is supported, a relatively large value may be set.

The foregoing implementations may be properly combined.

S901-S907 are operations that may be always performed, without being restricted by whether the three-finger swipe down operation is performed. However, to prevent file monitoring from being always performed in the background, which occupies resources and consumes power, a trigger condition may be added before step S901, so that the monitoring is performed only under a specific condition.

In an implementation, file monitoring is started in response to a starting operation of an application having a file viewing and/or editing function. In other words, file monitoring is performed only when it is possible to open a file.

S908: The user performs a three-finger swipe down operation on a file A that is opened in the application interface.

S909: The application interface reports a file collection task, that is, a file material extraction task, to the document extraction framework. The document extraction framework obtains file information of the file A from all stored file information based on the collection task. When the file information of the file A cannot be obtained, the file information of the file A is obtained by using a field of an activity.

In other words, in the three-finger swipe down operation, it is inevitable that an operation is performed in a display interface of an open file. Therefore, file information is preferentially searched for from the stored file information, and when the file information fails to be found, the file information is searched for from the activity.

It should be further understood that, step S903 includes any file, which is not necessarily the file A in S908, and when three-finger swipe down is performed in S908, it indicates that step S903 has been completely performed on the file A, but whether steps S903-S907 have been performed is unknown. Therefore, it is possible that when step S910 starts to be performed, step S907 corresponding to the file A has not been completely performed, that is, the file information of the file A has not been well stored. As a result, the file information of the file A may fail to be found in step S910.

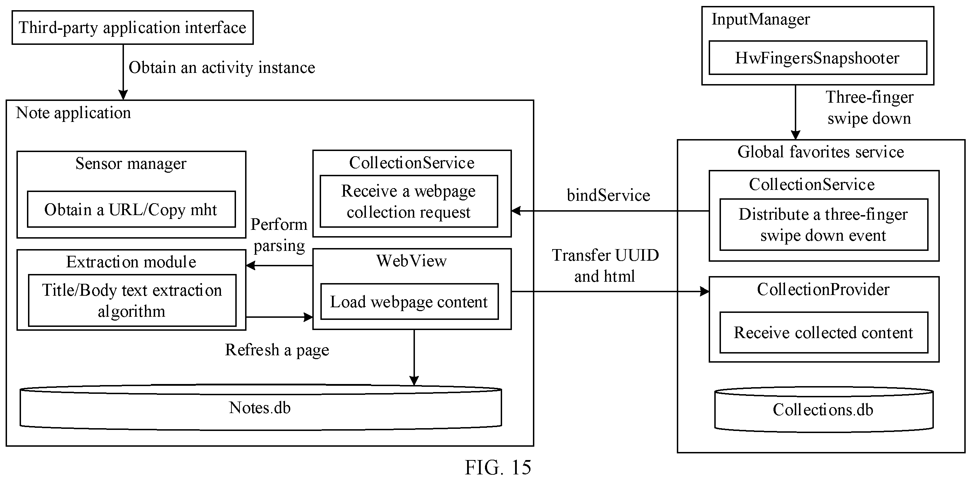

FIG. 15 is a schematic diagram of an execution framework for extracting a webpage material according to an embodiment of this application. As shown in FIG. 15, a three-finger swipe down operation obtained from an InputManager is sent to a global favorites service. A CollectionService in the global favorites service distributes a three-finger swipe down event, and sends a webpage collection request to a CollectionService in a note application through binder communication. After receiving the webpage collection request, the CollectionService in the note application needs to store webpage content. A sensor manager (SensorManager) obtains a URL of a webpage and copies an html file (mht file) of the webpage. A webview module in the note application loads the webpage content, parses the webpage content, invokes a title and body text extraction algorithm in an extraction module to obtain a title and body text content of the webpage through parsing, and then refreshes a page to the webview module. The Webview module sends obtained content of an offline webpage and a unique identifier UUID of the offline webpage in the note application to a CollectionProvider in the global favorites service. The CollectionProvider receives the webpage material (including the extracted title and body text content, and the UUID), and then stores, based on a storage mechanism of the webpage material, data that needs to be stored into a data storage unit Collections.db in the global favorites service.

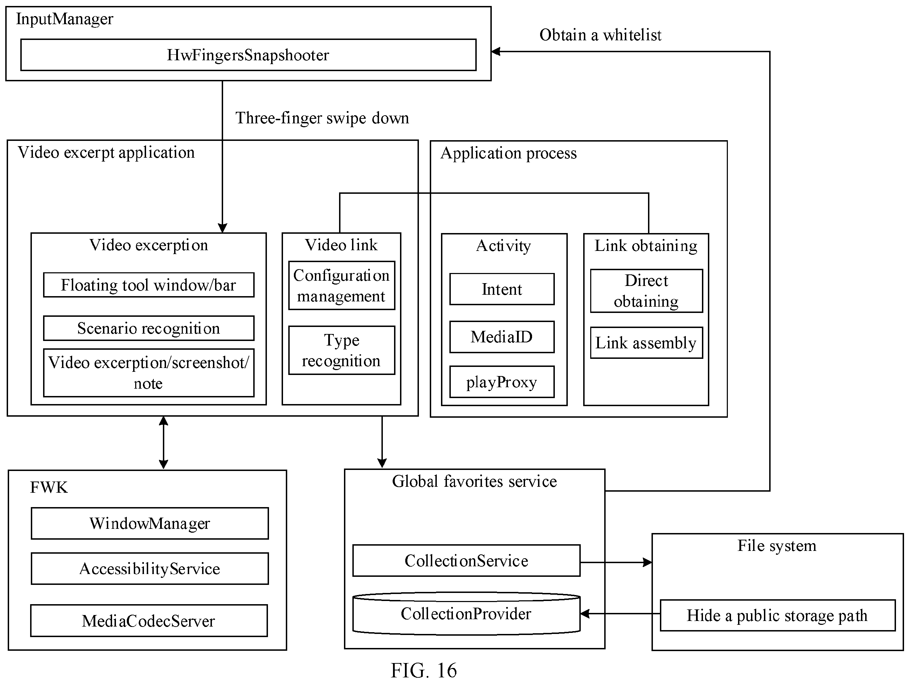

FIG. 16 is a schematic diagram of an execution framework for extracting an online link according to an embodiment of this application. It should be understood that the online link in FIG. 16 includes a webpage link and a video link. A three-finger swipe down operation obtained from an InputManager is sent to a video excerpt application or an application process. When video excerption needs to be performed, a video excerpt module in the video excerpt application performs video excerption based on a similar step shown in FIG. 16. The video excerpt module includes a floating tool window/bar, which is used to obtain an interactive operation of the user, and further includes scenario recognition, and may perform operations such as excerpting a video, taking a screenshot of the video, and adding a note to the video. The application process side may directly obtain a webpage link by using a connection obtaining module, or obtain a webpage link after assembling, and then send the webpage link to a video link in the video excerpt application. The video link module includes a configuration management module and a type recognition module. An activity in the application process includes an Intent, a video identifier (MediaID), and a playing module (playProxy).

The video excerpt application sends the excerpted video to a global favorites middleware platform. The global favorites middleware platform sends the video link or the webpage link to a file system, and obtains a URI of the video excerpt content.

An accessibility service (AccessibilityService), a video service MediaCodecServer, and a window management module (WindowManager) in a framework layer (FWK) are configured to provide background support services for the video excerpt application. The global favorites middleware platform sends a whitelist to the InputManager.

It should be understood that a webpage may include a video. The user may want to save a link of the entire webpage, may want to save only a specific link of a specific video, or may want to excerpt only a part of a specific video. Therefore, there is a case in which both the video link and the webpage link exist, as shown in FIG. 16. For extraction of an online link that does not have a video extraction requirement at all, a part related to video excerption in FIG. 16 may be removed.

In an implementation, when a current page is a standard webview, an online link of the webview is directly obtained according to a method for GetURL from the webview; or
when the current page is not a standard webview, for example, may be a custom webview, a name of the webview may be matched from configuration information of the current page, the webview is found, and then an online link of the webview is obtained according to a method for GetURL; or
when the current page is neither a standard webview nor a custom webview, an online link may be read from a field of the activity.

A basis (a webview or another specific view) for the foregoing determining may be searched for from the whitelist configuration information.

The foregoing mainly describes the methods in the embodiments of this application with reference to the accompanying drawings. It should be understood that, although the steps in the flowcharts in the foregoing embodiments are sequentially displayed, these steps are not necessarily performed sequentially based on the sequences shown in the accompanying drawings. Unless expressly stated in this specification, these steps are not performed in strict sequences, and these steps may be performed in other sequences. In addition, at least a part of the steps in the flowcharts in the foregoing embodiments may include a plurality of steps or a plurality of stages. These steps or stages are not necessarily performed and completed at the same time, but may be performed at different times. These steps or stages are not necessarily performed sequentially, but may be performed in turn or alternately with other steps or at least a part of steps or stages in the other steps. The following describes an apparatus in an embodiment of this application with reference to an accompanying drawing.

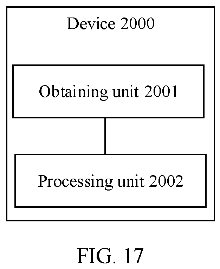

FIG. 17 is a schematic diagram of a structure of an electronic device according to an embodiment of this application. As shown in FIG. 17, the device 2000 includes an obtaining unit 2001 and a processing unit 2002. The device 2000 may be an electronic device such as a mobile phone, a tablet computer, or a touchscreen notebook computer.

The device 2000 can be configured to perform any one of the foregoing methods. For example, the obtaining unit 2001 may be configured to perform step S801, and the processing unit 2002 may be configured to perform steps S802-S804. For another example, the obtaining unit 2001 may be configured to perform step S401, and the processing unit 2002 is configured to perform steps S402-S405. The device 2000 may be further configured to execute an interaction process or an execution process shown in FIG. 1A-FIG. 7 and FIG. 9-FIG. 16.

In an implementation, the device 2000 may further include a storage unit, configured to store related data. The storage unit may be integrated into any one of the foregoing units, or may be a unit independent of all the foregoing units.

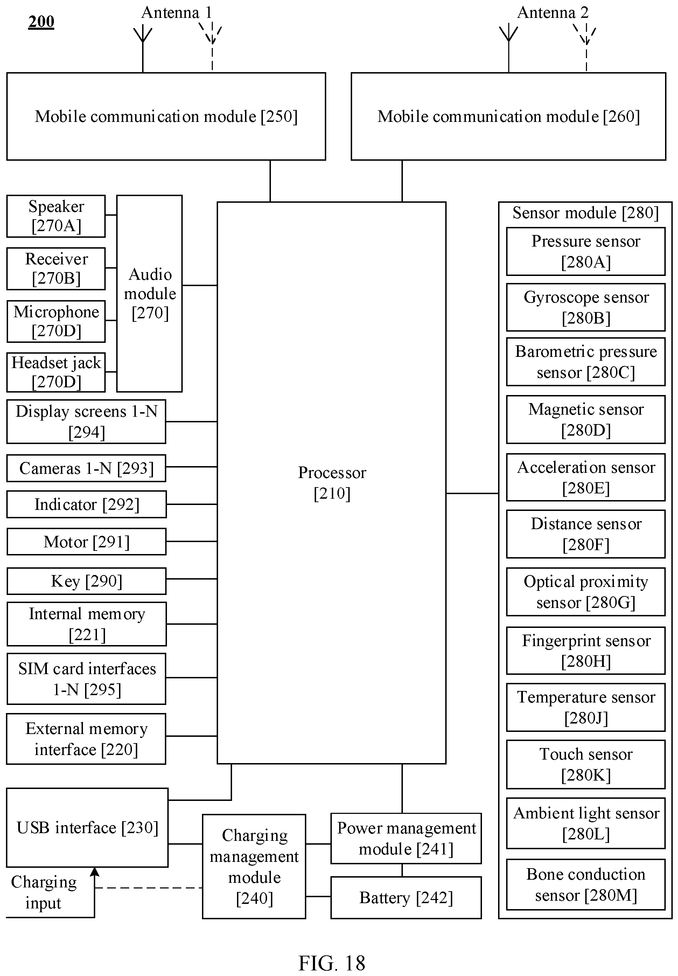

FIG. 18 is a schematic diagram of a hardware structure of another electronic device according to an embodiment of this application. As shown in FIG. 18, the electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a key 290, a motor 291, an indicator 292, a camera 293, a display screen 294, a subscriber identification module (subscriber identification module, SIM) card interface 295, and the like. The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

It may be understood that the structure shown in this embodiment of this application constitutes no specific limitation on the electronic device 200. In some other embodiments of this application, the electronic device 200 may include more or fewer components than those shown in the figure, some components may be combined, some components may be split, or there may be different component arrangements. The components shown in the figure may be implemented by hardware, software, or a combination of software and hardware.

For example, the processor 210 shown in FIG. 18 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 200. The controller may generate an operation control signal based on instruction operation code and a timing signal, to complete control of instruction fetching and instruction execution.

A memory may be further disposed in the processor 210 to store instructions and data. In some embodiments, the memory in the processor 210 is a cache memory. The memory may store instructions or data recently used or cyclically used by the processor 210. If the processor 210 needs to use the instructions or the data again, the processor may directly invoke the instructions or the data from the memory. This avoids repeated access and reduces waiting time of the processor 210, thereby improving system efficiency.

The electronic device 200 implements a display function by using the GPU, the display screen 294, the application processor, and the like. The GPU is a microprocessor for image processing and connects the display screen 294 and the application processor. The GPU is configured to perform mathematical and geometric computing for graphics rendering. The processor 210 may include one or more GPUs that execute program instructions to generate or change displayed information.

The display screen 294 is configured to display an image, a video, and the like. The display screen 294 includes a display panel. In some embodiments, the electronic device 200 may include 1 or N display screens 294, where N is a positive integer greater than 1.

The electronic device 200 may implement a shooting function by using the ISP, the camera 293, the video codec, the GPU, the display screen 294, the application processor, and the like.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent recognition of the electronic device 200, for example, image recognition, face recognition, speech recognition, and text understanding, may be implemented by using the NPU.

In this embodiment of this application, OCR recognition may be performed by using the NPU or the GPU.

The internal memory 221 may be configured to store computer-executable program code. The executable program code includes instructions. The processor 210 performs various function applications and data processing of the electronic device 200 by running the instructions stored in the internal memory 221. The internal memory 221 may include a program storage area and a data storage area. The program storage area may store an operating system, an application required by at least one function (for example, a sound playing function or an image playing function), and the like. The data storage area may store data (for example, audio data and a phone book) created during use of the electronic device 200. In addition, the internal memory 221 may include a high-speed random access memory, and may further include a nonvolatile memory, for example, at least one magnetic disk storage device, a flash memory device, or a universal flash storage (universal flash storage, UFS).

In this embodiment of this application, the extracted material may be stored in the internal memory or the external memory, or the URI or the URL of the material is stored in the internal memory, a source file is stored in the external memory, and so on. Examples are no longer listed one by one.

The pressure sensor 280A is configured to sense a pressure signal, and may convert the pressure signal into an electrical signal. In some embodiments, the pressure sensor 280A may be disposed in the display screen 294. There are various types of pressure sensors 280A, for example, a resistive pressure sensor, an inductive pressure sensor, and a capacitive pressure sensor. The capacitive pressure sensor may include at least two parallel plates having a conductive material. When force is applied onto the pressure sensor 280A, a capacitance between electrodes changes. The electronic device 200 determines intensity of pressure based on a change of the capacitance. When a touch operation is performed on the display screen 294, the electronic device 200 detects intensity of the touch operation by using the pressure sensor 280A. The electronic device 200 may also calculate a touch position based on a detected signal of the pressure sensor 280A. In some embodiments, touch operations performed at a same touch position but having different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The touch sensor 280K is also referred to as a "touch panel". The touch sensor 280K may be disposed on the display screen 294. The touch sensor 280K and the display screen 294 constitute a touchscreen that is also referred to as a "touch control screen". The touch sensor 280K is configured to detect a touch operation on or near the touch sensor. The touch sensor may transfer the detected touch operation to the application processor to determine a type of a touch event. Visual output related to the touch operation may be provided by using the display screen 294. In some other embodiments, the touch sensor 280K may alternatively be disposed on a surface of the electronic device 200, at a location different from that of the display screen 294.

It should be noted that content such as information exchange or an execution process between the apparatuses/units is based on a same concept as that in the method embodiments of this application. Therefore, for specific functions and technical effects brought by the apparatuses/units, refer to the method embodiment parts. Details are not described herein again.

Persons skilled in the art may clearly understand that, for ease and brevity of description, division into the foregoing functional units and modules is merely used as an example for description. In an actual application, the foregoing functions may be allocated to different functional units and modules for implementation according to a requirement, that is, an internal structure of the apparatus is divided into different functional units or modules, to complete all or some of the functions described above. The functional units or modules in the embodiments may be integrated into one processing unit, each unit may exist alone physically, or two or more units are integrated into one unit. The foregoing integrated unit may be implemented in a form of hardware, or may be implemented in a form of a software functional unit. In addition, specific names of the functional units and modules are also used for ease of mutual distinction, and are not used to limit the protection scope of this application. For a specific working process of each of the units and the modules in the foregoing system, refer to a corresponding process in the foregoing method embodiments. Details are not described herein again.

An embodiment of this application further provides an electronic device. The electronic device includes at least one processor, a memory, and a computer program that is stored in the memory and that is capable of running on the at least one processor. When the processor executes the computer program, the electronic device is enabled to implement the steps in any one of the foregoing methods.

An embodiment of this application further provides a computer-readable storage medium. The computer-readable storage medium stores a computer program, and when the computer program is executed by an electronic device, the steps in the foregoing method embodiments may be implemented.

An embodiment of this application provides a computer program product. The computer program product includes a computer program. When the computer program is executed by an electronic device, the steps in the foregoing method embodiments may be implemented.

When the integrated unit is implemented in the form of the software functional unit and sold or used as an independent product, the integrated unit may be stored in a computer-readable storage medium. Based on such an understanding, all or some of the processes in the methods of the foregoing embodiments may be implemented by a computer program instructing relevant hardware in this application. The computer program may be stored in a computer-readable storage medium. When the computer program is executed by a processor, the steps in the foregoing method embodiments may be implemented. The computer program includes computer program code, and the computer program code may be in a source code form, an object code form, an executable file, some intermediate forms, or the like. The computer-readable medium may include at least any entity or apparatus capable of carrying the computer program code to a photographing apparatus/electronic device, a recording medium, a computer memory, a read-only memory (read-only memory, ROM), a random access memory (random access memory, RAM), an electrical carrier signal, a telecommunications signal, and a software distribution medium, for example, a USB flash drive, a removable hard disk, a magnetic disk, or an optical disc. In some jurisdictions, the computer-readable medium cannot be an electrical carrier signal or a telecommunications signal according to legislation and patent practice.

In the foregoing embodiments, the descriptions of the embodiments have respective focuses. For a part that is not detailed or described in an embodiment, refer to related descriptions in other embodiments.

Persons of ordinary skill in the art may be aware that the units and the algorithm steps in the examples described with reference to the embodiments disclosed in this specification can be implemented by using electronic hardware or a combination of computer software and electronic hardware. Whether these functions are performed by hardware or software depends on specific applications and design constraints of the technical solutions. Persons skilled in the art may use different methods to implement the described functions for each specific application, but it should not be considered that such an implementation goes beyond the scope of this application.

In the embodiments provided in this application, it should be understood that the disclosed apparatus/device and method may be implemented in another manner. For example, the apparatus/device embodiment described above is merely an example. For example, division into the modules or units is merely logical function division. In actual implementation, there may be another division manner. For example, a plurality of units or components may be combined or integrated into another system, or some features may be ignored or not performed. In addition, the displayed or discussed mutual coupling, direct coupling, or communication connection may be implemented through some interfaces, and indirect coupling or a communication connection of the apparatuses or units may be in an electrical, mechanical, or another form.

The units described as separate components may or may not be physically separated, and components displayed as units may or may not be physical units, in other words, may be located in one place, or may be distributed on a plurality of network units. Some or all of the units may be selected according to an actual requirement to achieve the objectives of the solutions in the embodiments.

It should be understood that when being used in this specification and the appended claims of this application, the term "include" indicates presence of a described feature, entirety, step, operation, element, and/or component, but does not rule out presence or addition of one or more other features, entireties, steps, operations, elements, components, and/or sets thereof.

It should be further understood that the term "and/or" used in this specification and the appended claims of this application means any combination and all possible combinations of one or more of listed associated items, and these combinations are included.

As used in this specification and the appended claims of this application, the term "if' may be interpreted according to the context as "when...", "once", "determining in response to", or "detecting in response to". Similarly, the phrase "if it is determined that" or "if [a described condition or event] is detected" may be interpreted according to the context as "once it is determined that", "it is determined that in response to", "once [a described condition or event] is detected", or "[a described condition or event] is detected in response to".

In addition, in the descriptions of this specification and the appended claims of this application, the terms "first", "second", "third", and the like are merely used to distinguish between the descriptions, and should not be understood as indicating or implying relative importance.

Referring to "one embodiment", "some embodiments", or the like that is described in this specification of this application means that specific features, structures, or characteristics described with reference to one or more embodiments are included in the one or more embodiments of this application. Therefore, statements such as "in one embodiment", "in some embodiments", or "in some other embodiments" that appear in different parts of this application do not necessarily refer to same embodiments, but mean "one or more but not all embodiments" unless otherwise specifically emphasized in another manner. The terms "include", "comprise", and "have", and variants thereof all mean "include but are not limited to", unless otherwise specifically emphasized in another manner.

The foregoing embodiments are merely used to describe the technical solutions of this application, instead of limiting the technical solutions of this application. Although this application is described in detail with reference to the foregoing embodiments, persons of ordinary skill in the art should understand that they may still modify the technical solutions described in the foregoing embodiments, or perform equivalent replacement on some technical features. However, these modifications or replacements do not make the essence of the corresponding technical solutions depart from the spirit and scope of the technical solutions in embodiments of this application, and shall fall within the protection scope of this application.

## Claims

1. A method for collecting a material across applications, applied to an electronic device, wherein the electronic device comprises a first processing framework and a second processing framework, and the method comprises:
running a first application and displaying a first interface on the electronic device; and
adding, in response to a first operation performed by a user on the first interface, a first material in the first interface to a second application by using the first processing framework, wherein the first operation is a three-finger swipe down operation in the first interface; or
adding, in response to a second operation performed by the user on the first interface, a second material in the first interface to the second application by using the second processing framework, wherein the second operation is a touch-and-hold and drag-and-drop operation performed on the second material selected from the first interface.

2. The method according to claim 1, wherein the adding, in response to a first operation performed by a user on the first interface, a first material in the first interface to a second application by using the first processing framework comprises:
invoking an interface of an activity management service AMS in the first processing framework to obtain a screenshot of the first interface;
invoking a global favorites middleware platform of the first processing framework to determine a view type comprised in the screenshot of the first interface;
displaying a second interface on the electronic device, wherein the second interface comprises the screenshot of the first interface and at least one control, and the at least one control is determined based on the view type comprised in the screenshot of the first interface; and
adding, in response to a tap operation performed by the user on a first control in the at least one control, the first material to the second application in a collection form corresponding to the first control by using the first processing framework.

3. The method according to claim 2, wherein the first control is a content extraction control, and the adding, in response to a tap operation performed by the user on a first control in the at least one control, the first material to the second application in a collection form corresponding to the first control by using the first processing framework comprises:
traversing and filtering all views in the screenshot of the first interface by using the global favorites middleware platform, to obtain a first sub-view set, wherein the first sub-view set comprises at least one sub-view whose content is extractable;
extracting, by using the global favorites middleware platform, content of each sub-view in the first sub-view set based on a view type of the sub-view, to obtain extracted content corresponding to the sub-view;
displaying a third interface on the electronic device after extraction of all sub-views in the first sub-view set is completed, wherein the third interface comprises extracted content of the first sub-view set;
determining, in response to a selection operation performed by the user on target content in the extracted content of the first sub-view set in the third interface, the selected target content as the first material; and
adding, in response to a tap operation performed by the user on a favorites confirmation control in the third interface, the first material to the second application by using the global favorites middleware platform.

4. The method according to claim 3, wherein the traversing and filtering all views in the screenshot of the first interface by using the global favorites middleware platform, to obtain a first sub-view set comprises:
performing, for each view in the screenshot of the first interface during traversing, at least one of the following operations: when the view is a standard view, obtaining a view type of the view in a manner of obtaining the standard view, or when the view is a custom view, determining a view type of the view by using a suffix of the view; and reading a size and/or a location of the view; and
performing, during filtering, at least one of the following operations: retaining only a view visible to the user in the screenshot of the first interface, removing a hidden view in the screenshot of the first interface, and removing a partially or completely blocked view in the screenshot of the first interface.

5. The method according to claim 3 or 4, wherein the first sub-view set comprises a sub-view of at least one view type of a text, a picture, an offline webpage, a file, a video, and a link; and the extracting, by using the global favorites middleware platform, content of each sub-view in the first sub-view set based on a view type of the sub-view, to obtain extracted content corresponding to the sub-view comprises:
invoking, for each sub-view when a view type of the sub-view is a text, a text extraction module in the global favorites middleware platform to obtain text data of the sub-view, and determining the obtained text data as extracted content of the sub-view; or
invoking, for each sub-view when a view type of the sub-view is a picture, a picture extraction engine in the global favorites middleware platform to obtain a bitmap of the picture from the sub-view, and determining the bitmap as extracted content of the sub-view, and/or invoking a text processing module in the global favorites middleware platform to obtain text data comprised in the picture in an optical character recognition OCR manner; or
invoking, for each sub-view when a view type of the sub-view is an offline webpage, a webpage extraction engine in the global favorites middleware platform to perform title extraction and content parsing on the webpage to obtain extracted content of the sub-view, wherein the extracted content of the sub-view comprises an extracted title and parsed webpage content; or
invoking, for each sub-view when a view type of the sub-view is a file, a file extraction engine in the global favorites middleware platform to obtain a file path of the file, determining a copy file of the file or the file path of the file as extracted content of the sub-view, and determining file information of the file as the extracted content of the sub-view; or
invoking, for each sub-view when a view type of the sub-view is a video, a video extraction engine in the global favorites middleware platform, recognizing a playing area of the video by reading a video identifier ID that is written by the first application into an accessibility node, and performing screen recording, taking a screenshot, and/or adding a label, to obtain extracted content of the sub-view; or
invoking, for each sub-view when a view type of the sub-view is a link, an online link extraction engine in the global favorites middleware platform, and obtaining link information based on a uniform resource locator URL field carried in an activity activity or in a manner of reading a uniform resource locator getURL from a webpage view webview, wherein the obtained link information is extracted content of the sub-view.

6. The method according to claim 5, wherein the invoking, for each sub-view when a view type of the sub-view is a text, a text extraction module in the global favorites middleware platform to obtain text data of the sub-view, and determining the obtained text data as extracted content of the sub-view comprises:
invoking an intelligent recognition platform by using the text extraction module, so that the intelligent recognition platform obtains the text data of the sub-view in the OCR manner, or obtaining, by using the text extraction module, the text data of the sub-view in a manner of reading information that is written by the first application into the accessibility node.

7. The method according to any one of claims 3 to 6, wherein the adding, in response to a tap operation performed by the user on a favorites confirmation control in the third interface, the first material to the second application by using the global favorites middleware platform comprises at least one of the following operations:
directly adding a text material in the first material to the second application;
storing a picture material in the first material into a gallery application, and adding a thumbnail of the picture to the second application, wherein the picture stored in the gallery application is associated with the thumbnail of the picture in the second application, and the thumbnail of the picture is a mapping element of the picture in the second application;
storing an offline webpage material in the first material into a note application, and adding introduction content of the offline webpage to the second application, wherein the offline webpage stored in the note application is associated with the introduction content of the offline webpage in the second application, and the introduction content of the offline webpage is a mapping element of the offline webpage in the second application;
storing a video material in the first material into the gallery application, and adding a thumbnail of a first frame of image of the video to the second application, wherein the video stored in the gallery application is associated with the thumbnail of the first frame of image of the video in the second application, and the thumbnail of the first frame of image of the video is a mapping element of the video in the second application;
storing a file material in the first material into a file management application, and adding file information of the file to the second application, wherein the file stored in the second application is associated with the file information of the file in the second application, the file information of the file is a mapping element of the file in the second application, and the file information comprises an icon of a file type and a file name; and
directly adding a link material in the first material to the second application.

8. The method according to any one of claims 2 to 7, wherein the first control is a webpage collection control, a link collection control, or a file collection control, and the adding, in response to a tap operation performed by the user on a first control in the at least one control, the first material to the second application in a collection form corresponding to the first control by using the first processing framework comprises:
when the first control is the webpage collection control, adding the first material to the second application in a form of an offline webpage, wherein the first material is content of an entire webpage of a webpage displayed in the first interface; or
when the first control is the webpage collection control, adding the first material to the second application in a form of an offline webpage, wherein the first material is content, displayed in an interface, of a webpage displayed in the first interface; or
when the first control is the link collection control, adding the first material to the second application in a form of a link, wherein the first material is an online link of a webpage displayed in the first interface; or
when the first control is the file collection control, adding the first material to the second application in a form of a file, wherein the first material is a file displayed in the first interface, and the file is an open document, a video displayed in full screen, or a picture displayed in full screen.

9. The method according to any one of claims 2 to 8, wherein the invoking a global favorites middleware platform of the first processing framework to determine a view type comprised in the screenshot of the first interface comprises determining, based on a whitelist configuration of the first application or a whitelist configuration of the first interface, the view type comprised in the screenshot of the first interface; and
the displaying a second interface on the electronic device, wherein the second interface comprises the screenshot of the first interface and at least one control comprises:
when the view type comprised in the screenshot of the first interface comprises a webpage, the at least one control comprises at least one of the webpage collection control, the link collection control, and the content extraction control; or
when the view type comprised in the screenshot of the first interface comprises a file, the at least one control comprises at least one of the file collection control and the content extraction control; or
when the view type comprised in the screenshot of the first interface comprises only a picture or a video, the at least one control comprises at least one of the file collection control and the content extraction control.

10. The method according to any one of claims 1 to 9, wherein the adding, in response to a second operation performed by the user on the first interface, a second material in the first interface to the second application by using the second processing framework comprises:
obtaining, by using a content recognition service in the second processing framework, the second material selected by the user from the first interface;
determining, by using the content recognition service, a view type comprised in the second material based on touch-and-hold coordinates of the second operation;
traversing and searching a view tree by using a view recognizer in the second processing framework to obtain a sub-view whose content is extractable comprised in the second material, to obtain a second sub-view set, wherein the second sub-view set comprises at least one sub-view whose content is extractable;
extracting, by using the content recognition service, content of each sub-view in the second sub-view set based on a view type of the sub-view, to obtain extracted content corresponding to the sub-view;
obtaining extracted content of the second sub-view set after extraction of all sub-views in the second sub-view set is completed; and
adding, by using a window management service WMS in the second processing framework, the extracted content of the second sub-view set to the second application based on a view type comprised in the extracted content of the second sub-view set.

11. The method according to claim 10, wherein the adding, by using a window management service WMS in the second processing framework, the extracted content of the second sub-view set to the second application based on a view type comprised in the extracted content of the second sub-view set comprises at least one of the following operations:
directly adding text content in the extracted content of the second sub-view set to the second application;
storing picture content in the extracted content of the second sub-view set into the gallery application, and adding a thumbnail of the picture to the second application, wherein the picture stored in the gallery application is associated with the thumbnail of the picture in the second application, and the thumbnail of the picture is a mapping element of the picture in the second application;
storing offline webpage content in the extracted content of the second sub-view set into the note application, and adding introduction content of the offline webpage to the second application, wherein the offline webpage stored in the note application is associated with the introduction content of the offline webpage in the second application, and the introduction content of the offline webpage is a mapping element of the offline webpage in the second application;
storing video content in the extracted content of the second sub-view set into the gallery application, and adding a thumbnail of a first frame of image of the video to the second application, wherein the video stored in the gallery application is associated with the thumbnail of the first frame of image of the video in the second application, and the thumbnail of the first frame of image of the video is a mapping element of the video in the second application;
storing file content in the extracted content of the second sub-view set into the file management application, and adding file information of the file to the second application, wherein the file stored in the second application is associated with the file information of the file in the second application, the file information of the file is a mapping element of the file in the second application, and the file information comprises an icon of a file type and a file name; and
directly adding link content in the extracted content of the second sub-view set to the second application.

12. The method according to any one of claims 1 to 11, wherein after the first material or the second material is added to the second application, the method further comprises:
displaying a floating capsule snackbar on the electronic device, wherein the snackbar comprises a prompt indicating a collection success and a view control; and
starting the second application in response to a tap operation performed by the user on the view control, and displaying an adding result in an interface of the second application.

13. The method according to any one of claims 1 to 12, wherein the first material is obtained by performing the following steps:
obtaining a first object of the first interface, wherein the first object comprises a view whose material is to be extracted;
determining a material type set of the first object, wherein the material type set comprises at least one material type of the text, the picture, the file, the webpage, the video, and the online link;
determining a view set corresponding to each type of material in the material type set in the first object, wherein each type of material corresponds to one view set, and each view set comprises all views for which a material of a material type corresponding to the view set is extractable;
extracting, for each material type in the material type set of the first object, a material of the material type from a view set corresponding to the material type; and
obtaining a first material corresponding to the first object after extraction of all the view sets corresponding to the material type set of the first object is completed.

14. The method according to claim 13, wherein when the material type set of the first object comprises a text material, a view set corresponding to the text material comprises at least one of a text view, a picture view, a file view, and a webview; and the extracting, for each material type in the material type set of the first object, a material of the material type from a view set corresponding to the material type comprises:
extracting, when the text material is extracted from the view set corresponding to the text material, text data in each view in the view set based on an obtaining manner of the first object, and determining the extracted text data as the text material extracted from the first object.

15. The method according to claim 14, wherein the extracting, when the text material is extracted from the view set corresponding to the text material, text data in each view in the view set based on an obtaining manner of the first object, and determining the extracted text data as the extracted text material comprises:
when the obtaining manner of the first object is a touch-and-hold and drag-and-drop operation on the first object, wherein the view set corresponding to the text material comprises a text view and further comprises a file view or a webview, extracting text data in the text view according to a preconfigured extraction rule in a configuration file corresponding to the first object, or extracting, when the first object does not have a corresponding configuration file, text data in the text view according to a custom extraction rule; or
when the obtaining manner of the first object is a three-finger swipe down operation in the interface, wherein the view set corresponding to the text material comprises a picture view of an interface screenshot of the first interface, extracting a text from each view in the view set corresponding to the text material in the optical character recognition OCR manner.

16. The method according to claim 15, wherein the extracting, when the first object does not have a corresponding configuration file, text data in the text view according to a custom extraction rule comprises:
reading the text data of the text view from an accessibility node AccessibilityNodeInfo corresponding to the text view; or
when the text data of the text view fails to be read from the AccessbilityNodeInfo, reading text content from a text obtaining interface getText corresponding to the text view; or
when the text data of the text view fails to be read from the AccessbilityNodeInfo or the getText, obtaining a text view identifier ViewID in a manner of directly invoking a view, and then obtaining the text data of the text view based on the ViewID; or
when the text data fails to be read from the AccessbilityNodeInfo, the getText, or the ViewID, obtaining the text data from a view character obtaining interface getViewString of the text view in a manner of directly invoking a view.

17. The method according to claim 13, wherein when the material type set of the first object comprises a picture material, a view set corresponding to the picture material comprises at least one of a picture view, a webview, and a custom view; and
the extracting, for each material type in the material type set of the first object, a material of the material type from a view set corresponding to the material type comprises:
determining, from the view set corresponding to the picture material based on a configuration corresponding to a view name or an application name, at least one view that comprises a picture of a standard picture view, the webview, and the custom view;
obtaining, for the standard picture view, a bitmap of the standard picture view in a manner of reading a storage interface of the picture, and determining the bitmap of the standard picture view and a uniform resource identifier URI of the bitmap of the standard picture view as a picture material extracted from the first object;
obtaining, for the webview, a bitmap and a URI of a picture in the webview in a manner of injecting a JS script, and determining the bitmap of the webview and the URI of the bitmap of the webview as a picture material extracted from the first object;
copying, for the custom view, a bitmap in a manner of traversing and searching a key attribute in the custom view, and determining the bitmap of the custom view and a URI of the bitmap of the custom view as a picture material extracted from the first object; and
drawing, for the custom picture view when the bitmap fails to be found from the key attribute, a bitmap of the custom picture view, and determining the bitmap of the custom view and a URI of the bitmap of the custom view as a picture material extracted from the first object.

18. The method according to claim 17, wherein the obtaining, for the standard picture view, a bitmap of the standard picture view in a manner of reading a storage interface of the picture comprises:
reading the bitmap of the standard picture view from a storage node of the standard picture view; or
when the bitmap of the standard picture view fails to be read, drawing a bitmap of the standard picture view.

19. The method according to claim 13, wherein when the material type set of the first object comprises a file material, a view set corresponding to the file material comprises a file view; and the extracting, for each material type in the material type set of the first object, a material of the material type from a view set corresponding to the material type comprises:
directly extracting, when the first object is a file selected from the first interface, the obtaining manner of the first object is a touch-and-hold and drag-and-drop operation on the first object, and the view set corresponding to the file material comprises only the file view, file information of the file view in the first object, searching whether the file exists in a storage path of the file view, and when the file exists in the storage path of the file view, copying the file and determining a URI of the copied file and the extracted file information as a file material extracted from the first object; or
searching, when the first interface is a display page of an open file, the first object is the open file, the obtaining manner of the first object is a three-finger swipe down operation in the first interface, and the view set corresponding to the file material comprises a file view corresponding to the open file, and further comprises a text view and/or a picture view, pre-storage space for file information of the open file, copying the file based on a file path indicated by the read file information, and determining a URI of the copied file and the read file information as a file material extracted from the first object; or when the file information of the open file fails to be found from the pre-storage space in a preset time period after the three-finger swipe down operation occurs, obtaining the file information of the open file by using a field of an activity activity, copying the file based on a file path indicated by the obtained file information, and determining a URI of the copied file and the obtained file information as a file material extracted from the first object, wherein the pre-storage space comprises file information of all detected open files.

20. The method according to claim 19, wherein the directly extracting, when the first object is a file selected from the first interface, the obtaining manner of the first object is a touch-and-hold and drag-and-drop operation on the first object, and the view set corresponding to the file material comprises only the file view, file information of the file view in the first object, searching whether the file exists in a storage path of the file view, and when the file exists in the storage path of the file view, copying the file and determining a URI of the copied file and the extracted file information as a file material extracted from the first object comprises:
determining whether the first application accesses a file drag-and-drop framework; and
directly obtaining the URI of the open file when the first application accesses the file drag-and-drop framework; or
scanning and searching for, when the first application does not access the file drag-and-drop framework, a file path of the open file by using a file name of the open file, to obtain the URI of the open file.

21. The method according to claim 13, wherein when the material type set of the first object comprises a webpage material, a view set corresponding to the webpage material comprises a webview; and the extracting, for each material type in the material type set of the first object, a material of the material type from a view set corresponding to the material type comprises:
extracting a title and body text content of the webview in the first object in a manner of reading and parsing a readability file, and determining the extracted title and body text content as a webpage material extracted from the first object.

22. The method according to claim 13, wherein when the material type set of the first object comprises a video material, a view set corresponding to the video material comprises a webview; and the extracting, for each material type in the material type set of the first object, a material of the material type from a view set corresponding to the material type comprises:
determining a video playing area in the first interface in a manner of reading video configuration information that is written by the first application into the accessibility node, performing at least one operation of performing screen recording, taking a screenshot, and adding a label on a video being played, to obtain video excerpt content, and determining the obtained video excerpt content and a URI of the video excerpt content as a video material extracted from the first object.

23. The method according to claim 13, wherein when the material type set of the first object comprises an online link material, a view set corresponding to the online link material comprises at least one of an online link view and a webview; and the extracting, for each material type in the material type set of the first object, a material of the material type from a view set corresponding to the material type comprises:
obtaining the online link material based on the uniform resource locator URL field carried in the activity activity or in the manner of reading the uniform resource locator getURL from the webview.

24. The method according to claim 23, wherein the obtaining the online link material based on the uniform resource locator URL field carried in the activity activity or in the manner of reading the uniform resource locator getURL from the webview comprises:
obtaining, when the webview corresponding to the first interface is a standard webview, an online link of the standard webview directly in the getURL manner, wherein the obtained online link is an online link material extracted from the first object; or
matching, when the webview corresponding to the first interface is a custom webview, a name of the webview from configuration information of the first interface to find the custom webview corresponding to the first interface, and then obtaining an online link of the custom webview in the getURL manner, wherein the obtained online link is an online link material extracted from the first object; or
obtaining, when the webview corresponding to the first interface is neither a standard webview nor a custom webview, an online link of the webview from the URL field carried in the activity.

25. An electronic device, comprising a memory, one or more processors, and a computer program that is stored in the memory and that is capable of running on the processors, wherein when the one or more processors execute the computer program, the electronic device is enabled to implement the method according to any one of claims 1 to 24.

26. A computer-readable storage medium, wherein the computer-readable storage medium stores a computer program, and when the computer program is executed by an electronic device, the method according to any one of claims 1 to 24 is implemented.
